# EUROPEAN PATENT SPECIFICATION

(11) **EP 3 855 334 B1**
(45) Date of publication and mention of the grant of the patent: **10.05.2023**
(21) Application number: 19879390.3
(22) Date of filing: 16.10.2019
(51) Int. Cl.: G06F 21/64, G06F 21/57, G06F 8/61

(54) **MANAGEMENT SYSTEM, ACQUISITION DEVICE AND MANAGEMENT METHOD**
VERWALTUNGSSYSTEM, ERFASSUNGSVORRICHTUNG UND VERWALTUNGSVERFAHREN
SYSTÈME DE GESTION, DISPOSITIF D'ACQUISITION ET PROCÉDÉ DE GESTION

(30) Priority: 30.10.2018 JP 2018203556
(43) Date of publication of application: 28.07.2021
(73) Proprietor: NIPPON TELEGRAPH AND TELEPHONE CORPORATION, Chiyoda-ku, Tokyo 100-8116, (JP)
(72) Inventor: MIYAMOTO, Tsuyoshi, Musashino-shi, Tokyo 180-8585 (JP); KINOSHITA, Kazumi, Musashino-shi, Tokyo 180-8585 (JP); KOMATSU, Yuichi, Musashino-shi, Tokyo 180-8585 (JP); YAMAKOSHI, Kimihiro, Musashino-shi, Tokyo 180-8585 (JP)
(74) Representative: Hoffmann Eitle
(86) International application number: PCT/JP2019/040636
(87) International publication number: WO 2020/090469

(56) References cited:
- JP-A- H08 234 966
- JP-A- 2017 111 549
- JP-A- 2019 008 377
- US-B1- 9 448 780
- BAILEY E C: "Maximum RPM - Taking the Red Hat Package Manager to the Limit", MAXIMUM RPM - TAKING THE RED HAT PACKAGE MANAGER TO THE LIMIT, XX, XX, 1 June 1998 (1998-06-01), pages I-XXIV, 1, XP002406989,
- Cappos Justin ET AL: "Package Management Security", , 1 January 2008 (2008-01-01), XP055916176, Retrieved from the Internet: URL:https://www2.cs.arizona.edu/people/jsa muel/papers/TR08-02.pdf [retrieved on 2022-04-28]

## Description

### Technical Field

The present invention relates to a management system, an acquisition device, and a management method.

### Background Art

In the related art, a digital content tampering monitoring device that creates a standard summary value of digital content and checks whether the content has been tampered with has been proposed (for example, see Patent Literature 1). This tampering monitoring device monitors tampering or deficiency of a file set, in addition to Web content. In this device, a system administrator creates a snapshot of a clean environment and uses the snapshot as collation information.

Further, as a function for allowing a software provider to provide data for verifying the integrity of a file set constituting software, there is an RPM that is a software package management function that is standardly included in a UNIX (trade name) type operating system (see, for example, Non Patent Literatures 1 and 2). In the RPM, a file digest or signature is provided for each package and is registered in an RPM database. In the RPM, a file installed in a file system can be collated with a digest value of a database.

### Citation List

### Patent Literature

Patent Literature 1: JP 2001-265217 A

US 9 448 780 B1 describes an RPM verifier. A master configuration file and a list of host servers are retrieved. The master configuration file defines rules for approved versions of software packages installed on each host server in the list. The RPM verifier queries each host server in the list for a version identifier of one or more software packages installed on each host server. The rules are applied to the version identifier to identify one or more mis-configured software packages on each host server.

### Non Patent literature

Non Patent Literature 1: RPM Package Manager, [online], [Retrieved on September 19, 2018], Internet <URL:http://rpm.org/>
Non Patent Literature 2: All you have to know about RPM, [online], [Retrieved on September 19, 2018], Internet <URL: http://fedoranews.org/alex/tutorial/rpm/14.shtml>

CIATION 1, BAILEY E C: "Maximum RPM - Taking the Red Hat Package Manager to the Limit", XP002406989, describes using RPM to verify installed packages. Each part of a label to be included in the verification is specified and the RPM procedure is executed.

Cappos Justin ET AL: "Package Management Security, XP055916176, describes package management security. Selective trust delegation and customized repository view are used to identify malicous packages.

### Summary of the Invention

### Technical Problem

However, in the related art, there is a problem in that the burden on an administrator for file management is heavy. Further, in the related art, there is a problem in that there are cases in which excess/deficiency of files whose digest values cannot be defined, such as log files, cannot be verified, there are cases in which directories that should not be subjected to excess/deficiency verification cannot be excluded from management targets, and there are cases in which it is difficult to accurately verify files that are management targets. Further, in the related art, there is a problem in that, when some files belonging to a software package can be changed, a software provider cannot provide accurate collation information for such files and an administrator cannot accurately verify the integrity of the files.

Specifically, in the device described in Patent Literature 1, there are cases in which certain accuracy cannot be held because it is necessary for the system operator to create and maintain a snapshot in each system, the burden on the system operator and a total cost increase in the system, and the device often depends on skill of the system operator.

In the device described in Patent Literature 1, files that should not be subjected to data verification are included in this snapshot. For example, the files are log files or databases. False detection occurs unless the files are excluded from the collation information. However, extraction of these requires the administrator to be familiar with an operation specification of the software, which is sometimes difficult.

Further, in the device described in Patent Literature 1, directories that should not be subjected to excess/deficiency verification are included in a snapshot. For example, these are files that are added or deleted in a legitimate operation of software. False detection occurs unless the files are excluded from the collation information. However, extraction of these requires the administrator to be familiar with the operation specification of the software, which is difficult. Thus, in the related art, there is a problem in that there are cases in which the burden on the administrator for file management is heavy and it is difficult to accurately verify a file that is a management target.

Further, in the functions described in Non Patent Literatures 1 and 2, when some of the file paths of the files belonging to the software package can be customized (prefix designation, wildcard designation, or the like), the software provider cannot designate file paths of the collation information of the files. Further, in the functions described in Non Patent Literatures 1 and 2, when some of the files belonging to the software package can be deleted at the time of installation (manual files or the like), the software provider cannot determine whether the files to be described in the collation information. Further, in the functions described in Non Patent Literatures 1 and 2, when some file data belonging to the software package can be changed at the time of installation (setting files or the like), the software provider cannot designate a digest value of file data of collation information of these files. Thus, in the related art, when some files belonging to a software package can be changed, a software provider cannot provide accurate collation information for such files.

The present invention has been made in view of the above circumstances, and an object of the present invention is to provide a management system, an acquisition device, and a management method capable of reducing the burden on an administrator regarding file management and accurately verifying files using appropriately and efficiently generated collation information according to files that are management targets.

### Means for Solving the Problem

The above-mentioned problems are solved and the object is achieved by the Subject matter of the independent claims. Advantageous embodiments are disclosed in the dependent claims. A management system according to an exapmple is a management system including a management device configured to manage arranged file, a generation device configured to generate collation information to be collated by the management device when performing a tampering verification or an excess/deficiency verification of a file, and an acquisition device configured to acquire information to be used for generation of the collation information in the generation device, in which the acquisition device includes a first acquisition unit configured to acquire, from a device configured to store shared common definition information indicating a definition of a common list serving as a list of files and directories likely to be described in the collation information and a definition of an element attribute serving as conditions for determining elements of a list of files and directories in the collation information in a file management device, first common definition information corresponding to identification information of the first common definition information input to the acquisition device, a distinction unit configured to compare the first common definition information acquired by the first acquisition unit with the file managed by the file management device to distinguish whether there is a file satisfying all the conditions of the first common definition information, and an output unit configured to output, to the generation device, second common definition information corresponding to the file managed by the file management device among the first common definition information acquired by the first acquisition unit based on a distinction result of the distinction unit.

Further, an acquisition device according to an example is an acquisition device for acquiring information to be used for generation of collation information to be collated when a tampering verification or an excess/deficiency verification of a file is performed, the acquisition device including an acquisition unit configured to acquire, from a device configured to store shared common definition information indicating a definition of a common list serving as a list of files and directories likely to be described in the collation information and a definition of an element attribute serving as conditions for determining elements of a list of files and directories in the collation information in a file management device, first common definition information corresponding to identification information of the first common definition information input to the acquisition device, a distinction unit configured to compare the first common definition information acquired by the acquisition unit with a file managed by the file management device to distinguish whether there is a file satisfying all the conditions of the first common definition information, and an output unit configured to output second common definition information corresponding to a file serving as a management target among the first common definition information acquired by the acquisition unit based on a distinction result of the distinction unit.

### Effects of the Invention

According to the present invention, it is possible to reduce the burden on an administrator regarding file management and accurately verify files using appropriately and efficiently generated collation information according to files that are management targets.

### Brief Description of Drawings

Fig. 1 is a schematic diagram illustrating a schematic configuration of a management system including a file management device according to an embodiment.
Fig. 2 is a schematic diagram illustrating a schematic configuration of common definition information acquisition device illustrated in Fig. 1.
Fig. 3 is a diagram illustrating content defined by the common definition information illustrated in Fig. 2.
Fig. 4 is a diagram illustrating element attributes defined by the common definition information illustrated in Fig. 2.
Fig. 5 is a diagram illustrating an example of the common definition information illustrated in Fig. 2.
Fig. 6 is a diagram illustrating an example of an identifier of common definition information.
Fig. 7 is a diagram illustrating an example of an identifier of common definition information.
Fig. 8 is a diagram illustrating an example of common definition information stored in a common definition information database (DB).
Fig. 9 is a diagram illustrating files (software) managed by the file management device illustrated in Fig. 1.
Fig. 10 is a flowchart illustrating a processing procedure of common definition information acquisition processing according to the embodiment.
Fig. 11 is a flowchart illustrating a processing procedure of common definition information distinction processing illustrated in Fig. 10.
Fig. 12 is a schematic diagram illustrating a schematic configuration of the collation information generation device illustrated in Fig. 1.
Fig. 13 is a diagram illustrating content of a list included in collation information illustrated in Fig. 12.
Fig. 14 is a diagram illustrating an example of the collation information illustrated in Fig. 12.
Fig. 15 is a diagram illustrating item extraction information illustrated in Fig. 12.
Fig. 16 is a diagram illustrating individual definition information illustrated in Fig. 12.
Fig. 17 is a diagram illustrating an example of the individual definition information illustrated in Fig. 12.
Fig. 18 is a diagram illustrating processing of generating collation information in a generation unit illustrated in Fig. 12.
Fig. 19 is a flowchart of a processing procedure of processing of generating collation information according to the embodiment.
Fig. 20 is a flowchart of a processing procedure of the processing of generating collation information illustrated in Fig. 19.
Fig. 21 is a flowchart of a processing procedure of list B1 setting processing illustrated in Fig. 20.
Fig. 22 is a flowchart of a processing procedure of list B2 setting processing illustrated in Fig. 20.
Fig. 23 is a flowchart of a processing procedure of list B3 setting processing illustrated in Fig. 20.
Fig. 24 is a flowchart illustrating a processing procedure of individual definition information setting processing that is executed by the collation information generation device illustrated in Fig. 1.
Fig. 25 is a schematic diagram illustrating a schematic configuration of the file management device illustrated in Fig. 1.
Fig. 26 is a diagram illustrating an example of a data structure of verification content information illustrated in Fig. 25.
Fig. 27 is a diagram illustrating condition information illustrated in Fig. 25.
Fig. 28 is a diagram illustrating processing of the collation unit illustrated in Fig. 25.
Fig. 29 is a diagram illustrating processing of the collation unit illustrated in Fig. 25.
Fig. 30 is a flowchart of a processing procedure of file verification processing according to the embodiment.
Fig. 31 is a flowchart illustrating a processing procedure of collation processing illustrated in Fig. 30.
Fig. 32 is a flowchart illustrating a processing procedure of verification processing illustrated in Fig. 30.
Fig. 33 is a diagram illustrating an example of a data structure of correspondence relationship information illustrated in Fig. 25.
Fig. 34 is a diagram illustrating processing of generating collation information according to Modification Example 2 of the embodiment.
Fig. 35 is a diagram illustrating another example of the processing of generating collation information according to Modification Example 2 of the embodiment.
Fig. 36 is a diagram illustrating still another example of the processing of generating collation information according to Modification Example 2 of the embodiment.
Fig. 37 is a diagram illustrating an example of a computer in which respective devices included in a file management system is implemented by a program being executed.

### Description of Embodiments

Hereinafter, an embodiment of the present invention will be described in detail with reference to the drawings. The present invention is not limited to the embodiment. Further, in description of the drawings, the same parts are denoted with the same reference signs.

### Embodiment

First, a schematic configuration, a flow of file verification processing, and a specific example in a management system according to an embodiment will be described. The management system according to the present embodiment acquires common definition information corresponding to a file that is a management target from shared common definition information created in advance. The management system according to the present embodiment creates collation information to be applied to a device based on the acquired common definition information and device-specific definition information, and verifies any one of tampering with files, deletion of files, and addition of files that should not be arranged in a database using the collation information.

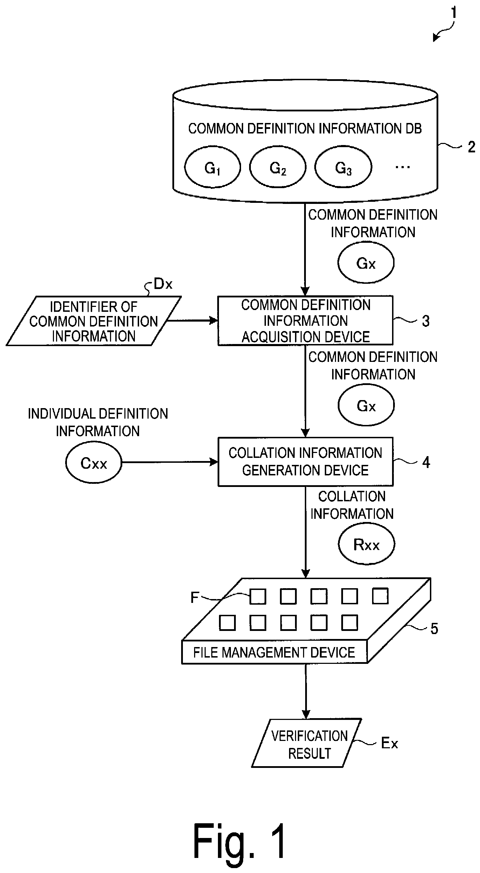

Fig. 1 is a schematic diagram illustrating a schematic configuration of a management system according to an embodiment. The management system 1 according to the embodiment has a configuration in which a common definition information database (DB) 2 and a common definition information acquisition device 3 (an acquisition device) are connected to each other, and a collation information generation device 4 (a generation device) and a file management device 5 (a management device) are arranged in a stage subsequent to the common definition information acquisition device 3, as illustrated in Fig. 1.

The common definition information DB 2 has shared common definition information (for example, common definition information G₁, G₂, and G₃). The shared common definition information G₁, G₂, and G₃ are created and provided by a software provider, for example. Storage and distribution of the shared common definition information G₁, G₂, and G₃ are not limited to a centralized management scheme, and various existing means can be applied.

The file management device 5 manages a plurality of arranged (installed) files F. The file management device 5 is a personal computer (PC) with a general-purpose operating system, a server device, or the like. The number of file management devices 5 illustrated in Fig. 1 is an example, and the number is not limited thereto.

A file set managed by the file management device 5 is specifically a file set forming a software package. The file set includes, for example, a program file that executes a program or a setting file that defines an execution order of the program files. A file path or a directory structure of the file set is often common regardless of an installation destination. The program file or the like is often the same data regardless of the installation destination. On the other hand, in the setting file or the like, data is often edited according to the installation destination. The file management device 5 identifies file data of a file that is a management target using file paths, classifies the file paths using directories, and identifies the directories using directory paths.

The common definition information acquisition device 3 acquires common definition information that the collation information generation device 4 uses to generate collation information. The common definition information acquisition device 3 acquires the common definition information Gx to be used by the collation information generation device 4 from the common definition information DB 2 based on an input identifier Dx of the common definition information, and outputs the common definition information Gx to the collation information generation device 4.

The collation information generation device 4 generates collation information to be collated by the file management device 5 at the time of file tampering verification or excess/deficiency verification. The collation information generation device 4 generates collation information Rxx satisfying the common definition information Gx output from the common definition information acquisition device 3 and individual definition information Cx for the collation information generation device 4. Here, the individual definition information Cxx is information indicating a condition to be individually provided according to the file management device 5 with respect to a file set that should be arranged in the file management device 5.

The file management device 5 collates the collation information Rxx generated by the collation information generation device 4 with the file that is a management target. The file management device 5 performs verification of tampering with files, deletion of files, or addition of files that should not be arranged in the database based on a collation result, and outputs a verification result Ex.

### Common Definition Information Acquisition Device

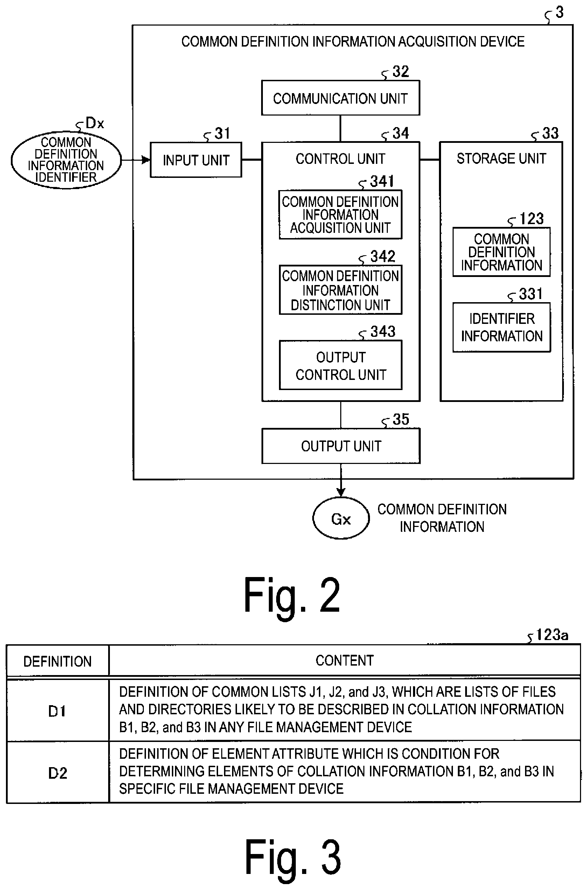

Next, the common definition information acquisition device 3 illustrated in Fig. 1 will be described with reference to Fig. 2. Fig. 2 is a schematic diagram illustrating a schematic configuration of the common definition information acquisition device 3 illustrated in Fig. 1. The common definition information acquisition device 3 includes an input unit 31, a communication unit 32, a storage unit 33, a control unit 34, and an output unit 35, as illustrated in Fig. 2.

The input unit 31 is an input interface that receives various operations from an operator of the common definition information acquisition device 3 or the like. For example, the input unit 31 includes an input device such as a touch panel, a voice input device, a keyboard, or a mouse. The input unit 15 receives, for example, an input of the identifier (identification information) Dx of the common definition information. The identifier Dx of the common definition information may be input through a file, a command line interface (CLI), or a graphical user interface (GUI). When an operator inputs the identifier, the operator may input a plurality of identifiers or may input, for example, a search formula including a logical computation that is used in a general-purpose search formula, such as AND, OR and NOT.

The communication unit 32 is a communication interface that transmits and receives various types of information to and from another device connected via a network or the like. The communication unit 32 is implemented by a network interface card (NIC) or the like, and performs communication between another device (for example, the common definition information DB 2) and the control unit 34 (to be described below) via a telecommunication line such as a local area network (LAN) or the Internet. For example, the communication unit 32 receives the common definition information Gx transmitted from the common definition information DB 2.

The storage unit 33 is a storage device such as a hard disk drive (HDD), a solid state drive (SSD), or an optical disc. The storage unit 10 may be a data rewritable semiconductor memory such as a random access memory (RAM), a flash memory, or a non volatile static random access memory (NVSRAM). The storage unit 10 stores an operating system (OS) or various programs that are executed by the common definition information acquisition device 3. Further, the storage unit 10 stores various types of information that are used for execution of programs. The storage unit 10 has common definition information 123 and identifier information 331.

The common definition information 123 is information acquired by common definition information acquisition unit 341 (to be described below) from the common definition information DB 2. For collation information that is collated at the time of file tampering verification or excess/deficiency verification in any file management device, the common definition information 123 defines a common list that is a list of files and directories likely to be described in the collation information. The common definition information 123 defines an element attribute that is a condition for determining an element of the list of files and directories of the collation information in a specific file management device.

Fig. 3 is a diagram illustrating content defined by the common definition information 123 illustrated in Fig. 2. The common definition information 123 defines a definition D1 and a definition D2, as shown in a table 123a of Fig. 3. That is, content of the definition D1 is a definition of common lists 11, J2, and J3 that are lists of files and directories likely to be described in the lists B1, B2, and B3 (to be described below) constituting the collation information in any file management device. Content of the definition D2 is a definition of an element attribute that is a condition for determining elements of the lists B1, B2, and B3 of the collation information in the specific file management device. In collation information 122, elements of the lists B1 to B3 are determined for the common lists J1 to J3 of the definition D1 based on element attributes of the definition D2.

Subsequently, the common definition information 123 defines a common list of files described in the lists B1 and B2 of the collation information of the file set, and a common list of directories described in the collation information B3. The common definition information 123 describes and defines attributes E1 to E4 to be described below as element attributes for these files and directories. E1, E2, and E3 are defined for the file, and E4 is defined for the directory.

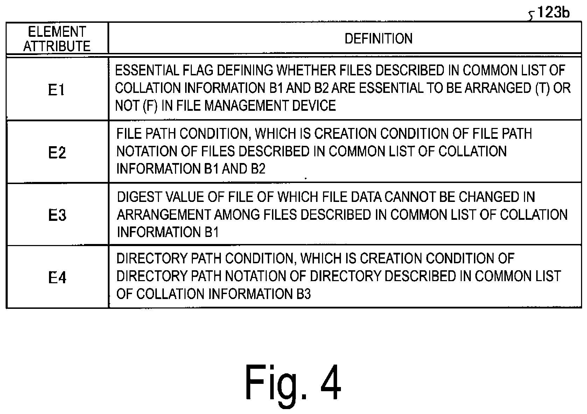

Fig. 4 is a diagram illustrating element attributes defined by the common definition information 123 illustrated in Fig. 2. E1 to E4 are defined as element attributes, as shown in the table 123b of Fig. 4. First, the element attribute E1 defines an essential flag defining a first flag (T) indicating that it is essential for a file described in a common list of the lists B1 and B2 of the collation information 122 to be arranged in the file management device, or a second flag (F) indicating that it is not essential for the file described in the common list of the lists B1 and B2 of the collation information 122 to be arranged in the file management device. The element attribute E2 defines a file path condition that is a creation condition of a file path notation of the file described in the common list of the lists B1 and B2 of the collation information 122. The element attribute E3 defines a digest value of a file of which file data cannot be changed in arrangement among the files described in the common list of the list B1 of the collation information. The element attribute E4 defines a directory path condition that is a creation condition of a directory path notation of the directory described in the common list of the collation information list B3.

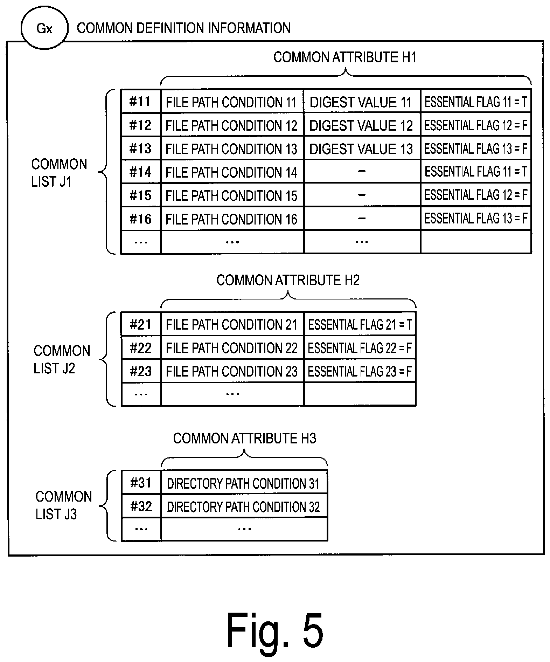

A specific example of the common definition information 123 will be described. Fig. 5 is a diagram illustrating an example of the common definition information 123 illustrated in Fig. 2. In Fig. 5, the common definition information Gx has common lists J1 to J3.

The common list J1 is a common list of files described in the list B1 of the collation information 122. In the common list 11, as element attributes of each file, a file path condition (element attribute E2), a digest value (the element attribute E3), and an essential flag (element attribute E1) are associated as a common attribute H1. Specifically, in the common list 11, "file path condition 11", "digest value 11", and "essential flag 11 = T" correspond to a file "#11". In the common list 11, "file path condition 12", "digest value 12", and "essential flag 12 = F" correspond to a file "#12".

A common list J2 is a common list of the files described in a list B2 of the collation information 122. In the common list J2, the file path condition (element attribute E2) and the essential flag (element attribute E1) serving as the element attributes of each file are associated as a common attribute H2. Specifically, in the common list J2, "file path condition 21" and "essential flag 21 = T" correspond to a file "#21". In the common list J2, a "file path condition 22" and "essential flag 22 = F" correspond to a file "#22".

A common list J3 is a common list of the directories described in the list B3 of the collation information 122. In this common list J3, a directory path condition (the element attribute E4) serving as an element attribute of each directory is associated as a common attribute H3. Specifically, in the common list J3, a "directory path condition 31" corresponds to a directory "#31". In the common list J3, a "directory path condition 32" corresponds to a directory "#32".

Next, the identifier information 331 will be described. The identifier information 331 has information for identifying each piece of common definition information. For example, the identifier information 331 includes elements such as an identifier name of the common definition information, an identifier of common definition information corresponding to other software required by the software, and version information regarding a version of the software. The version information is "v1.1 or later", "v1.3 or earlier", and the like. The identifier information 331 includes some or all of these elements. Further, the identifier information 331 may include a plurality of values corresponding to each element. However, there is one identifier name for the common definition information. The common definition information acquisition device 3 may hold only identifier information of the common definition information regarding the file managed by the file management device 5 to which the common definition information acquisition device 3 corresponds, or may hold identifier information of all common definition information included in the common definition information DB 2.

The control unit 34 controls the entire common definition information acquisition device 3. The control unit 34 is, for example, an electronic circuit such as a central processing unit (CPU) or a micro processing unit (MPU), or an integrated circuit such as an application specific integrated circuit (ASIC) or a field programmable gate array (FPGA). Further, the control unit 34 includes an internal memory for storing programs or control data that define various processing procedures, and executes each processing operation using the internal memory. Further, the control unit 34 functions as various processing units by operating various programs. The control unit 34 includes a common definition information acquisition unit 341 (a first acquisition unit), a common definition information distinction unit 342 (a distinction unit), and an output control unit 433 (an output unit).

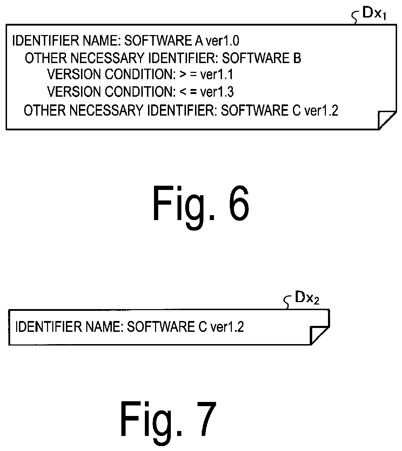

The common definition information acquisition unit 341 acquires, from the common definition information DB 2, common definition information corresponding to the identifier Dx of the common definition information input to the common definition information acquisition device 3. Figs. 6 and 7 are diagrams illustrating an example of the identifier Dx of the common definition information. An identifier Dx₁ of the common definition information illustrated in Fig. 6 includes an identifier name "software A ver1.0". Further, the identifier Dx₁ of the common definition information includes another necessary identifier and a version condition thereof, in addition to the identifier name. A plurality of elements other than the identifier name can be designated by an operator or the like. Only the identifier name can also be designated, like an identifier Dx₂ of the common definition information in Fig. 7.

The common definition information acquisition unit 341 extracts an identifier of the common definition information to be acquired based on the input identifier Dx of the common definition information. The common definition information acquisition unit 341 may further acquire other identification information relevant to the identifier Dx of the common definition information input to the common definition information acquisition device 3, and acquire a list of the identifier information of common definition information based on the identification information of the common definition information and the other identification information input to the common definition information acquisition device 3.

For example, when "identifier: software A" is input as the identifier Dx of the common definition information, the common definition information acquisition unit 341 refers to the identifier information 331 to extract "software A ver1.0", "software A ver1.1", "software B ver1.0", "software B ver1.1", "software C ver1.0", and "software C ver1.1" as identifiers. When the version information is not included in an input identifier name of the identifier Dx of the common definition information, the common definition information acquisition unit 341 acquires all identifiers having "version information is added to the input identifier name" as an identifier name. The common definition information acquisition unit 341 is not limited to the identifier information 331 held in the own device and may extract the identifier of the common definition information to be acquired from identifier information held in an external device.

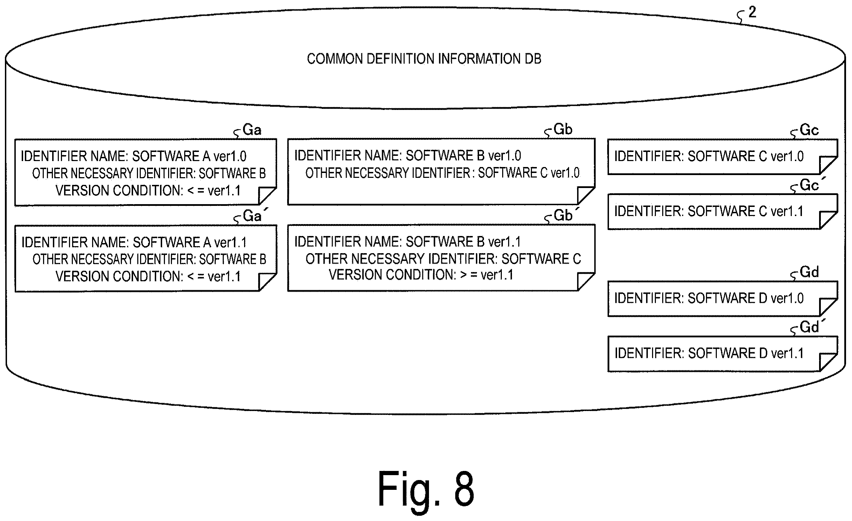

The common definition information acquisition unit 341 acquires the common definition information corresponding to the extracted identifier from the common definition information DB 2. Fig. 8 is a diagram illustrating an example of common definition information stored in the common definition information DB 2. The common definition information DB 2 stores common definition information Ga having an identifier name of "software A ver1.0", common definition information Ga' having an identifier name of "software A ver1.1", common definition information Gb having an identifier name of "software B ver1.0", common definition information Gb' having an identifier name of "software B ver 1.1", common definition information Gc having an identifier name of "software C ver1.0", common definition information Gc' having an identifier name of "software C ver1.1", common definition information Gd having an identifier name of "software D ver1.0", and common definition information Gd' having an identifier name of "software D ver1.1", as illustrated in Fig. 8.

The common definition information acquisition unit 341 acquires the common definition information Ga, Ga', Gb, Gb', Gc, and Gc' corresponding to an identifier "software A ver1.0", an identifier "software A ver1.1", an identifier "software B ver1.0", an identifier "software B ver1.1", an identifier "software C ver1.0", and an identifier "software C ver1.1" from the common definition information DB 2.

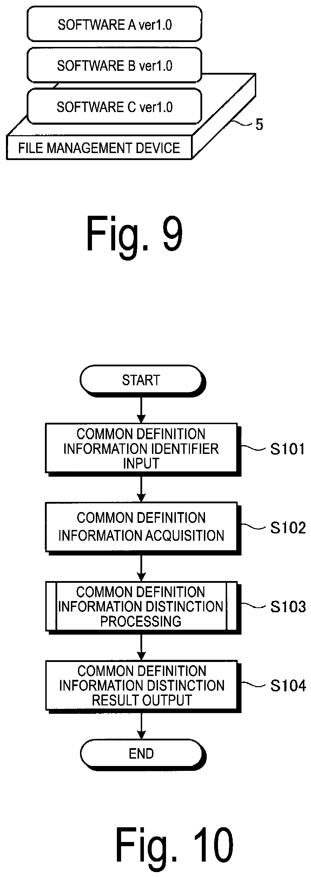

The common definition information distinction unit 342 compares the common definition information acquired by the common definition information acquisition unit 341 with the file F managed by the file management device 5 to distinguish whether there is a file satisfying all the conditions of the common definition information. Fig. 9 is a diagram illustrating files (software) managed by the file management device 5 illustrated in Fig. 1. As illustrated in Fig. 9, the file management device 5 installs and manages "software A ver1.0", "software B ver1.0", and "software C ver1.0". In this case, the common definition information distinction unit 342 distinguishes that the common definition information Ga, Gb, and Gc among the common definition information Ga, Ga', Gb, Gb', Gc, and Gc' acquired by the common definition information acquisition unit 341 matches "software A ver1.0", "software B ver1.0", and "software C ver1.0".

An output control unit 343 outputs the common definition information corresponding to the file managed by the file management device 5 among the common definition information acquired by the common definition information acquisition unit 341 to the collation information generation device 4 based on the distinction result of the common definition information distinction unit 342. The output control unit 343, for example, outputs the common definition information Gx to the collation information generation device 4 via the communication unit 32 or the like.

The output unit 35 is implemented by, for example, a display device such as a liquid crystal display, a printing device such as a printer, an information communication device, or the like, and outputs information regarding file management processing.

Processing Procedure of Common Definition Information Acquisition Processing Next, a processing procedure of the common definition information acquisition processing in the common definition information acquisition device 3 will be described. Fig. 10 is a flowchart illustrating a processing procedure of the common definition information acquisition processing according to the embodiment.

As illustrated in Fig. 10, in the common definition information acquisition device 3, when the input unit 31 receives an input of the identifier Dx of the common definition information (step S101), the common definition information acquisition unit 341 acquires the common definition information corresponding to the identifier Dx of the common definition information from the common definition information DB 2 (step S102).

Then, the common definition information acquisition device 3 performs processing that will be described below. The common definition information distinction unit 342 compares the common definition information acquired by the common definition information acquisition unit 341 with the file managed by the file management device 5 to perform common definition information distinction processing for determining whether there is a file F satisfying all the conditions of the common definition information (step S 103). The output control unit 343 outputs the common definition information corresponding to the file F managed by the file management device 5 among the common definition information acquired by the common definition information acquisition unit 341 to the collation information generation device 4 based on a distinction result of the common definition information distinction unit 342 (step S104).

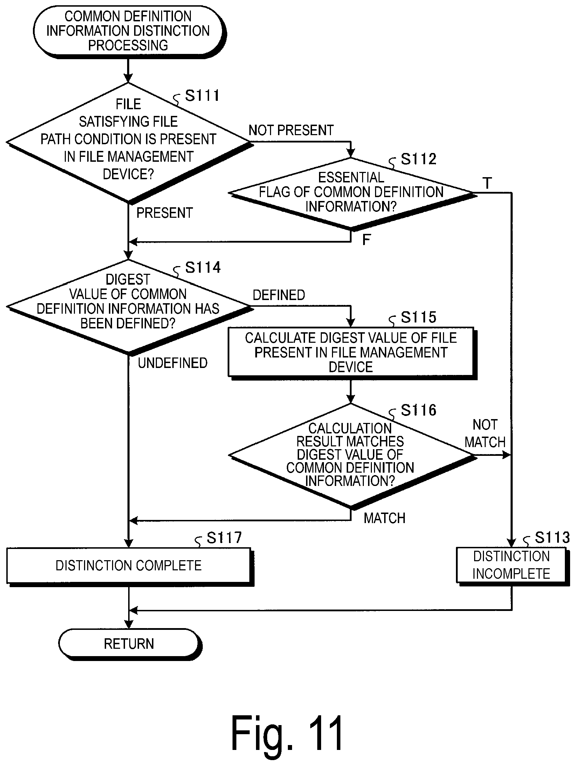

Processing Procedure of Common Definition Information Distinction Processing Next, a processing procedure of the common definition information distinction processing (step S103) will be described. Fig. 11 is a flowchart illustrating a processing procedure of common definition information distinction processing illustrated in Fig. 10.

The common definition information distinction unit 342 repeats the distinction processing on the common definition information acquired in step S102 of Fig. 10 for the number of entries described in each piece of the common definition information. First, the common definition information distinction unit 342 determines whether a file satisfying the file path condition is present in the file management device 5 (step S111).

When the common definition information distinction unit 342 determines that no file satisfying the file path condition is present in the file management device 5 (step S111: not present), the common definition information distinction unit 342 determines whether the flag of the common definition information is T or F (step S112). When the common definition information distinction unit 342 determines that the flag of the common definition information is T (step S112: T), the determination result is incompletion (step S113). That is, the common definition information distinction unit 342 distinguishes that there is no file F satisfying all the conditions of the common definition information for this entry. In this case, because the acquired common definition information does not match the file F managed by the file management device 5, the common definition information distinction unit 342 skips a distinction for subsequent entries. A distinction result of step S103 for this common definition information is incompletion.

When the common definition information distinction unit 342 determines that a file satisfying the file path condition is present in the file management device 5 (step S 111: present) or determines that the flag of the common definition information is F (S112: F), the common definition information distinction unit 342 determines whether a digest value of the common definition information is defined or undefined (step S114).

When the common definition information distinction unit 342 determines that the digest value of the common definition information is defined (step S114: defined), the common definition information distinction unit 342 calculates the digest value of the file present in the file management device 5 (step S115). The common definition information distinction unit 342 determines whether a calculation result matches the digest value of the common definition information (step S116).

When the common definition information distinction unit 342 determines that the calculation result does not match the digest value of the common definition information (step S116: mismatch), the processing proceeds to step S113. On the other hand, when the common definition information distinction unit 342 determines that the calculation result matches the digest value of the common definition information (step S116: match) or determines that the digest value of the common definition information is undefined (step S114: undefined), the distinction result is completion (step S117). When this distinction is made for all entries of certain common definition information, the distinction result of step S103 for the corresponding common definition information is completion.

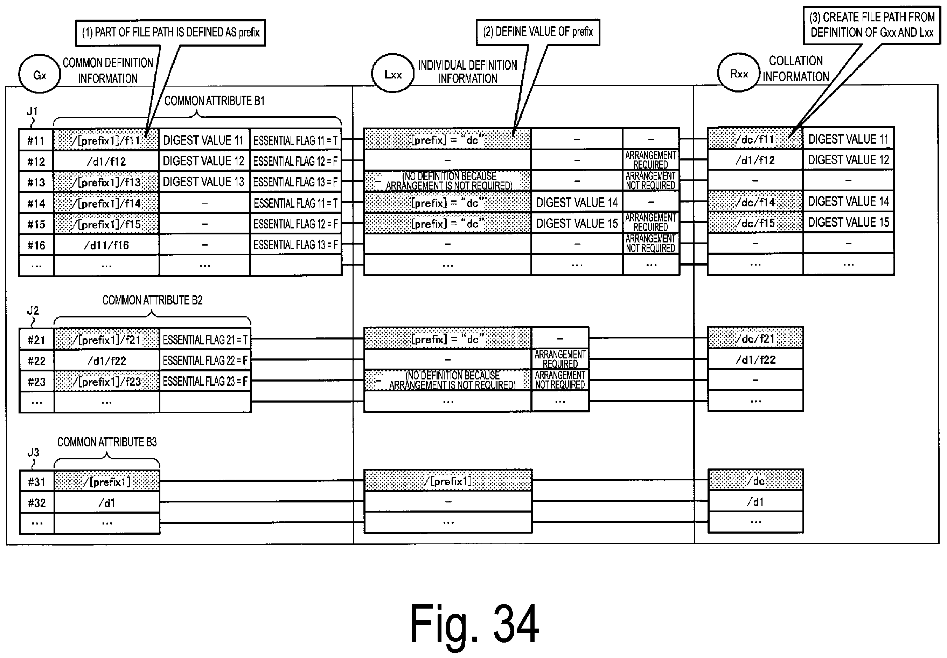

The common definition information distinction unit 342 performs the processing operations of steps S111 to S117 on all the entries described in the common definition information, and outputs the common definition information in which the distinction result is completion in step S104. Further, the common definition information distinction unit 342 outputs an error when the common definition information distinction processing result indicates that there is no common definition information that is an output target. The determination of the file path condition will be described with reference to Figs. 34 to 36 to be described below.

### Collation Condition Generation Device

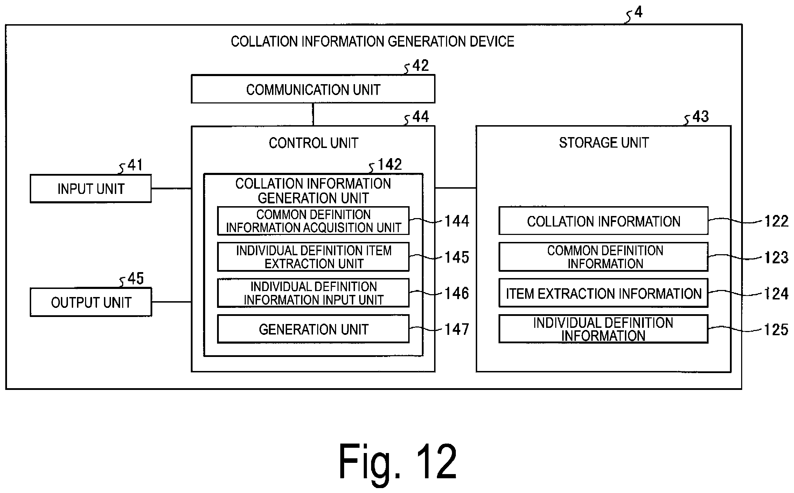

Next, the collation information creation device 4 will be described. Fig. 12 is a schematic diagram illustrating a schematic configuration of the collation information generation device 4.

The collation information generation device 4 has an input unit 41, a communication unit 42, a storage unit 43, a control unit 44, and an output unit 45. The input unit 41, the communication unit 42, the storage unit 43, the control unit 44, and the output unit 45 have the same functions as the input unit 11, the communication unit 12, the storage unit 13, the control unit 14, and the output unit 15. The input unit 41 receives an input of the individual definition information Cxx, for example, according to an operation with respect to the input device by the operator. The communication unit 42 also receives the common definition information Gx output from the common definition information acquisition device 3.

The storage unit 43 stores collation information for verifying the integrity of the file or information to be used when the collation information is generated. The storage unit 43 has the collation information 122, the common definition information 123, item extraction information 124, and individual definition information 125. Because the common definition information 123 has been described above, description thereof will be omitted.

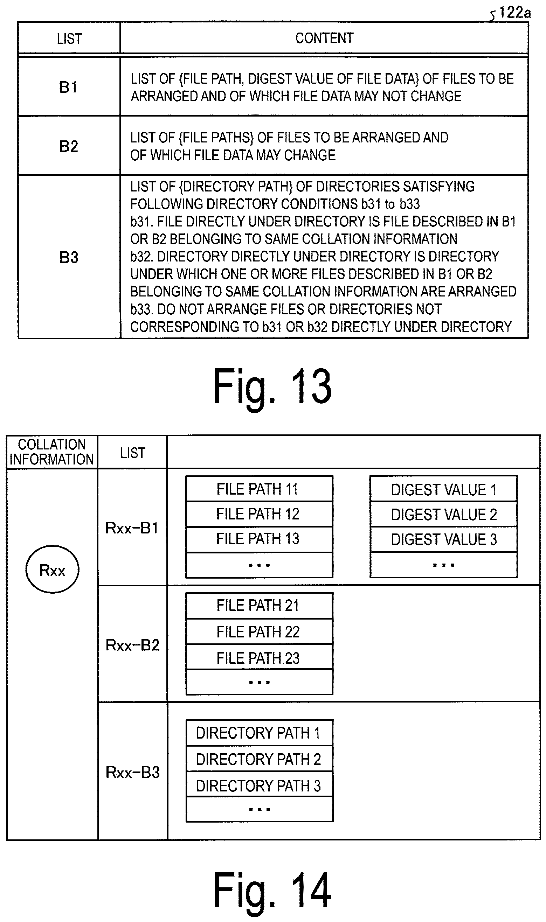

First, the collation information 122 will be described. The collation information 122 is, the collation information 122 is generated by the file management device 5 as collation information corresponding to the file set managed by the file management device 5. The collation information 122 includes a list B1 (first list), a list B2 (second list), and a list B3 (third list). The lists B1 to B3 will be described with reference to Fig. 13.

Fig. 13 is a diagram illustrating content of the lists B1 to B3 included in the collation information 122 illustrated in Fig. 12. As shown in a table 122a of Fig. 13, a list of combinations of file paths and digest values of the file data of the file that should be arranged in the file storage unit 11 and of which the file data does not change is shown in the list B1. Here, the digest value is, for example, a hash value of the file data. The hash value is a value obtained by converting original data with a hash function such as SHA256 and may be used for a determination of tampering because the hash value has a small size and the hash value also changes when the original data is changed (tampered with).

A list of file paths of files that should be arranged in the file storage unit 11 and of which the file data can change is shown in the list B2.

Further, a list of directory paths of directories satisfying the following directory conditions b31 to b33 is shown in the list B3. The directory condition b31 (first directory condition) is that files arranged directly under a directory are files described in the list B1 or the list B2 belonging to the same collation information. The condition b32 (second directory condition) is that a directory arranged directly under a directory is a directory under which one or more files described in the list B1 or the list B2 belonging to the same collation information are arranged. The condition b33 (third directory condition) is that files or directories not corresponding to the directory condition b31 or the directory condition b32 are not arranged directly under the directory.

Fig. 14 is a diagram illustrating an example of the collation information 122 illustrated in Fig. 12. The collation information Rxx has lists Rxx-B 1 to Rxx-B3, as illustrated in Fig. 14. Specifically, a combination of file paths "file paths 11 to 13" of files F11 to F13 and a digest value "digest value 1 to 3" of the file data is described in the list Rxx-B1. The files F11 to F13 are files that should be arranged in the file storage unit 11 and of which file data does not change. Further, the file paths "file paths 21 to 23" of the files F21 to 23 are described in the list Rxx-B2. The files 21 to F23 are files that should be arranged in the file storage unit 11 and of which the file data can change. "Directory paths 1 to 3" that are directory paths satisfying the directory conditions b31 to b33 are described in the list Rxx-B3.

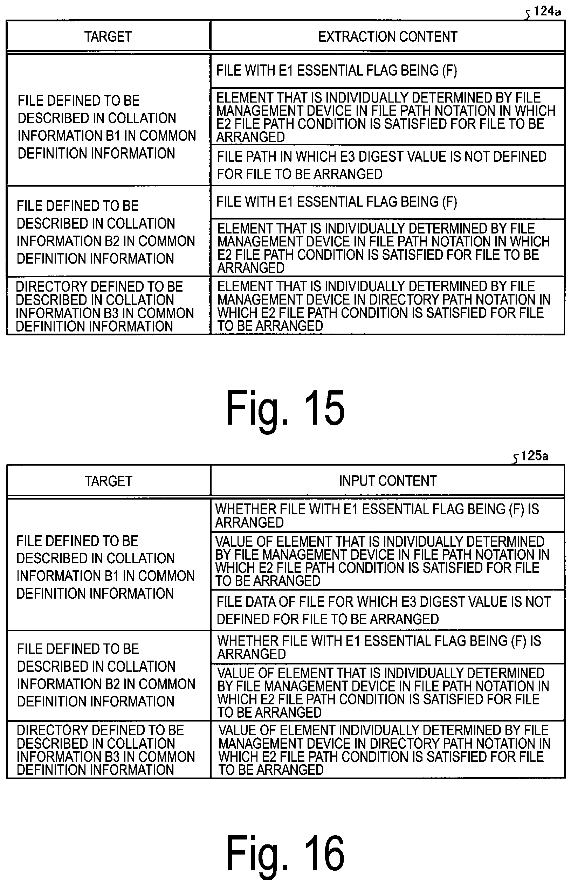

Next, the item extraction information 124 will be described. The item extraction information 124 is information indicating an extraction item from the common definition information 123. The extraction item is content to be an item that should be defined as individual information of the file management device 3. Fig. 15 is a diagram illustrating the item extraction information 124 illustrated in Fig. 12. The item extraction information 124 indicates extraction content from each target of the common definition information 123, and an extraction target and extraction content from the extraction target are associated with each other, as shown in a table 124a of Fig. 15.

For example, when a file defined to be described in the list B1 of the collation information 122 in the common definition information 123 is a target, there are three pieces of extraction content as follows. First extraction content is a file of which the essential flag, which is the element attribute E1, is "F". Second extraction content is an element that is individually determined by the file management device 3 in the file path notation satisfying the file path condition that is the element attribute E2 with respect to the files that are arranged. Third extraction content is a file path in which a digest value of the element attribute E3 is not defined for the files that are arranged.

When a file defined to be described in the list B2 of the collation information 122 in the common definition information 123 is a target, there are two pieces of extraction content as follows. First extraction content is a file of which the essential flag, which is the element attribute E1, is "F". Second extraction content is an element that is individually determined by the file management device 3 in the file path notation satisfying the file path condition that is the element attribute E2 with respect to the files that are arranged.

Further, when a directory defined to be described in the list B3 of the collation information 122 in the common definition information 123 is a target, extraction content is an element that is individually determined by the file management device in a directory path notation satisfying the file path condition that is the element attribute E2 with respect to the files that are arranged. An individual definition item extraction unit 145 (to be described below) extracts an item from the file or directory that is the target of the common definition information 123 according to the item extraction information 124, and defines the item as an item of the individual definition information 125.

Next, the individual definition information 125 will be described. The individual definition information 125 is information indicating a condition to be individually provided according to the file management device 5 for an item extracted from the common definition information 123 according to the item extraction information 124. For example, the individual definition information 125 is information input from the outside. Specifically, the individual definition information 125 is input from the outside by an operation with respect to the input unit 15 by an administrator of the file management device 5. Of course, not limited to this, the individual definition information 125 may be input from the outside via a communication unit 13. Fig. 16 is a diagram illustrating the individual definition information 125 illustrated in Fig. 12. As shown in a table 125a of Fig. 16, input content with respect to an input target is associated with the individual definition information 125.

Specifically, when the file defined to be described in the list B1 of the collation information 122 in the common definition information 123 is a target, there are three pieces of input content. First input content is whether there is an arrangement of a file of which the essential flag, which is the element attribute E1, is "F". Second input content is a value of an element that is individually determined by the file management device 5 in the file path notation satisfying the file path condition that is the element attribute E2 with respect to the files that are arranged. A third input content is a digest value of a file in which the digest value of the element attribute E3 is not defined with respect to the files that should be arranged.

When the file defined to be described in the list B2 of the collation information 122 in the common definition information 123 is a target, there are two pieces of input content as follows. First input content is whether there is an arrangement of a file of which the essential flag, which is the element attribute E1, is "F". Second input content is a value of an element that is individually determined by the file management device 5 in the file path notation satisfying the file path condition that is the element attribute E2 with respect to the files that are arranged.

Further, when a directory defined to be described in the list B3 of the collation information 122 in the common definition information 123 is a target, input content is a value of an element that is individually determined by the file management device 5 in the directory path notation satisfying the file path condition that is the element attribute E2 with respect to the files that are arranged. The individual definition information 125 is acquired by an individual definition information input unit 146 (to be described below). The collation information 122 is generated based on the common definition information 123 and the individual definition information 125.

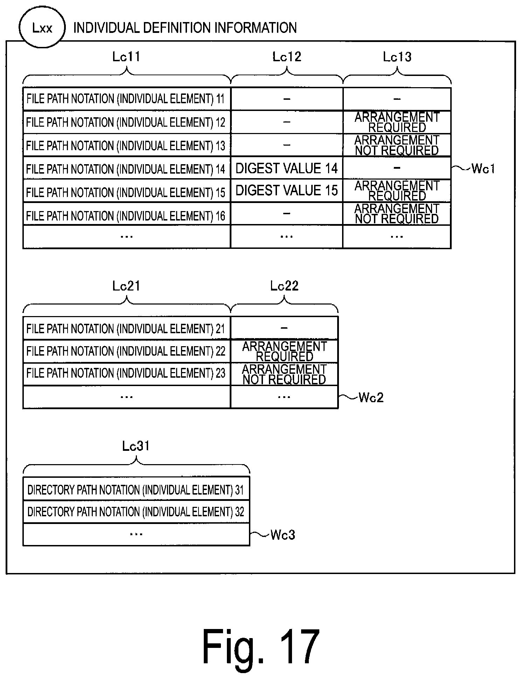

A specific example of the individual definition information 125 will be described. Fig. 17 is a diagram illustrating an example of the individual definition information 125 illustrated in Fig. 12. Individual definition information Lxx illustrated in Fig. 17 has lists Wc1 to Wc3.

The list Wc1 of the individual definition information Lxx is a list showing each condition to be included individually according to the file management device 5, that is, input content described in a first line illustrated in the table 125a in Fig. 16. for a file defined to be described in the list B1 of the collation information 122 in the common definition information Gx.

For example, in the list Wc1, the file path notation according to the files, the digest value according to the files, and the necessity of arrangement of the files according to the files are associated with files "#11" to "#16". Specifically, in the list Wc1, a "file path notation (individual element) 11" that is a file path notation corresponding to the file "#11" is shown in a first line (see column Lc11). Further, a "file path notation (individual element) 12" that is a file path notation corresponding to the file "#12" and "arrangement required" which is the necessity of arrangement for the file "#12" (see column Lc13) is shown in a second line. Further, a "file path notation (individual element) 14" that is a file path notation corresponding to a file "#14" and a "digest value 14" of the file "#14" (see column Lc12) are shown in a fourth line.

The list Wc2 of the individual definition information Lxx is a list showing each condition to be included individually according to the file management device 5, that is, input content described in a second line illustrated in the table 125a in Fig. 16. for a file defined to be described in the list B2 of the collation information 122 in the common definition information Gx.

For example, in the list Wc2, a file path notation or the necessity of file arrangement according to files is associated with the files "#21" to "#23". Specifically, in the list Wc2, a "file path notation (individual element) 21" that is a file path notation corresponding to the file "#21" is shown in a first line (see column Lc21). Further, a "file path notation (individual element) 22" that is a file path notation corresponding to the file "#22" and "arrangement required" that is the necessity of arrangement of the file "#22" are shown in a second line (see column Lc22).

The list Wc3 of the individual definition information Lxx is a list showing each condition to be included individually according to the file management device 5, that is, input content described in a third line illustrated in the table 125a in Fig. 16. for a directory defined to be described in the list B3 of the collation information 122 in the common definition information Gx.

For example, in the list Wc3, a directory path notation is associated with the directories "#31" and "#32" according to directories. Specifically, in the list Wc3, a "directory path notation (individual element) 31" that is a directory path notation corresponding to the directory "#31" is shown in a first line (see column Lc31). Further, a "directory path notation (individual element) 32" that is a directory path notation corresponding to the directory "#32" is shown in a second line.

The control unit 44 generates the collation information 122 to be used by the file management device 5 based on the common definition information Gx output from the common definition information acquisition device 3 and the individual definition information 125. The collation information 122 to be used by the file management device 5 is generated. The collation information generation unit 142 includes a common definition information acquisition unit 144 (a second acquisition unit), the individual definition item extraction unit 145, the individual definition information input unit 146, and a generation unit 147.

The common definition information acquisition unit 144 acquires at least a part of the shared common definition information stored in the common definition information DB 2. The common definition information acquisition unit 144 downloads common definition information 123 corresponding to a file set Fs arranged in the file storage unit 11 from an external common definition information DB 2 via a network or the like and acquires the common definition information 123. Alternatively, the common definition information acquisition unit 144 acquires the common definition information 123 through an input of a file or the like of the administrator of the file management device 5. The common definition information acquisition unit 144 stores the acquired common definition information 123 in verification information storage unit 12.

The individual definition item extraction unit 145 extracts an item to be defined as the individual definition information 125 from the common definition information 123 acquired by the common definition information acquisition unit 144. The individual definition item extraction unit 145 performs item extraction from the common definition information 123 according to the item extraction information 124. The item to be extracted is an item shown in the table 124a of Fig. 15 described above, and is set for each of the files or directories defined to be described in each of the lists B1 to B3 of the collation information 122. Description of each item is omitted because the item has been described with reference to Fig. 15.

The individual definition information input unit 146 receives an input of individual definition information for the item that the individual definition item extraction unit 145 has extracted from the common definition information 123. Content of the input information is an item shown in the table 125a of Fig. 16 described above, and is set for each of the files or directories defined to be described in each of the lists B1 to B3 of the collation information 122. Description of each piece of the input information is omitted because the input information has been described with reference to Fig. 16. The individual definition information 125 based on the information received by the individual definition information input unit 146 is, for example, the individual definition information Lxx illustrated in Fig. 17. The individual definition information input unit 146 stores the acquired individual definition information 125 in the verification information storage unit 12.

The individual definition information input unit 146 presents, to the administrator of the file management device 5, an operation screen showing, for example, each extraction item and an input field for a value of the item on a screen. In this case, for example, a structured file format such as extensible markup language (XML) or a graphical user interface (UI) may be used. The individual definition information input unit 146 receives information input to each input field by an operation with respect to the input unit 41 by the administrator of the file management device 5 to acquire the individual definition information 125. Further, the individual definition information input unit 146 outputs a request for transmission of a value of each extraction item to an external device via the communication unit 42. The individual definition information input unit 146 may receive each piece of information transmitted from the external device in response to the transmission request to acquire the individual definition information 125.

The generation unit 147 generates the collation information 122 based on the common list and the element attributes of the common definition information 123. The generation unit 147 generates the collation information 122 satisfying both the shared common definition information 123 and the individual definition information 125 indicating the condition to be individually provided according to the file management device 5 with respect to the file set that should be arranged in the file management device 5.

The generation unit 147 determines files to be arranged in the lists B 1 to B3 of the collation information 122 based on the common definition information 123 and the individual definition information 125, and determines the file paths, digest values, and directory paths described in the lists B 1 to B3. When file data is input as the individual definition information instead of the digest value, the generation unit 147 also calculates a digest value of the file data of the file that is arranged in the list B1. The generation unit 147 stores the generated collation information 122 as a file in the verification information storage unit 12. Alternatively, the generation unit 147 may directly import the generated collation information 122 into an integrity verification function that operates in the file management device 5, that is, a file verification unit 143.

### Processing of Generation Unit

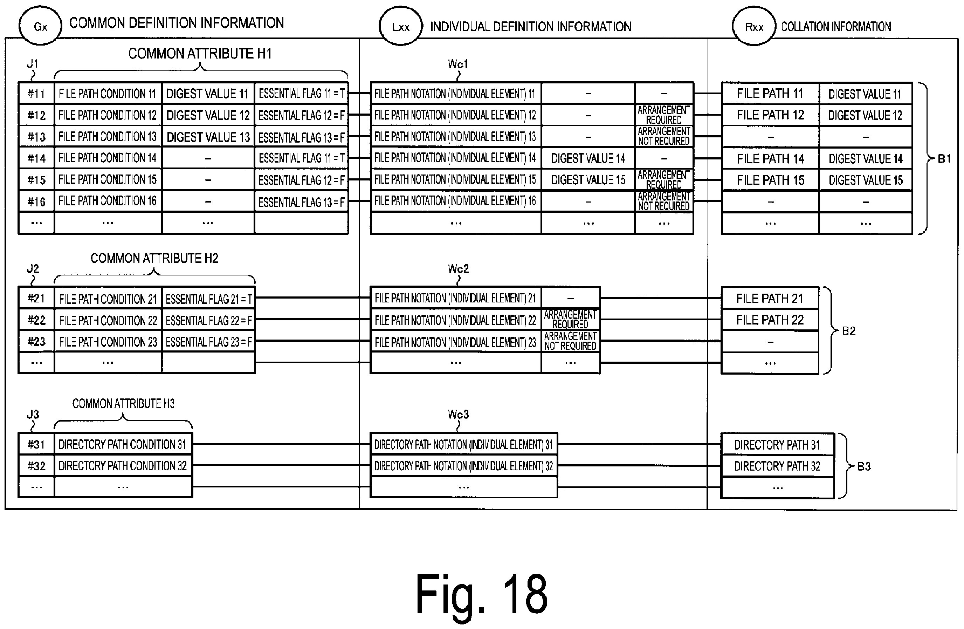

Next, processing of the collation information 122 in the generation unit 147 will be described. Fig. 18 is a diagram illustrating processing of generating the collation information 122 in the generation unit 147 illustrated in Fig. 12.

In Fig. 18, the common definition information Gx is shown on the left side, the individual definition information Lxx is shown at a center, and the collation information Rxx is shown on the right side. The common definition information Gx is acquired by the common definition information acquisition unit 144. The individual definition information Lxx is based on information received by the individual definition information input unit 146 as a condition to be individually included in the file management device 5 for the item extracted from the common definition information Gx by the individual definition item extraction unit 145. The collation information Rxx is generated by the generation unit 147 to satisfy both the individual definition information Lxx and the collation information Rxx based on the individual definition information Lxx and the collation information Rxx.

First, a case in which the generation unit 147 creates the list B1 of the collation information Rxx will be described. In this case, the generation unit 147 refers to the list Wc1 of the individual definition information Lxx and performs the following determination processing on the files defined to be described in the list B1 of the collation information Rxx in the common list J1 of the common definition information Gx.

The generation unit 147 determines whether the file to which "F" is added as an essential flag, which is the element attribute E1 in the common list J1 of the common definition information Gx, is arranged by referring to the list Wc1 of the individual definition information Lxx.

For example, because the files "#12" and "#15" that are a flag "F" of the common definition information Gx are set to "arrangement required" in the list Wc1 of the individual definition information Lxx, the generation unit 147 determines that the files "#12" and "#15" are to be arranged in the list B1. On the other hand, because the file "#13" that is the flag "F" of the common definition information Gx is set to "arrangement not required" in the list Wc1 of the individual definition information Lxx, the generation unit 147 determines that the file "#13" is not to be arranged in the list B1.

The generation unit 147 sets the file with the flag "F", which are determined to be arranged, and the file with the flag "T" as the files in the list B1. Specifically, the generation unit 147 determines the files "#12" and "#15" with the flag "F" and the files "#11" and "#14" with the flag "T", which are determined to be arranged, to be files in the list B1.

Subsequently, the generation unit 147 determines a file path notation satisfying the file path condition that is the element attribute E2 of the common list J1 of the common definition information Gx with respect to these files. The generation unit 147 describes the file path described according to the determined notation as the file path of the list B1.

That is, the generation unit 147 determines, for the files "#11", "#12", "#14", and "#15", a "file path notation (individual elements) 11, 12, 14, and 15" of the list Wc1 of the individual definition information Lxx to be a file path notation "file paths 11, 12, 14, and 15" satisfying the "file path conditions 11, 12, 14, and 15" of the common definition information Gx, and describes the file path notation in the list B1 of the collation information Rxx.

The generation unit 147 calculates, for the files that are arranged, a hash value of a file data for a file in which the digest value that is the element attribute E3 is not defined in the common list J1 of the common definition information Gx. The generation unit 147 determines the calculated hash value as the digest value. The generation unit 147 sets the determined digest value as the digest value of the list B 1.

For example, the digest valuesof the files "#14" and "#15" are not shown in the common list J1 of the common definition information Gx. Thus, the generation unit 147 calculates the hash value of the file data of the files "#14" and "#15" and determines the calculated hash value as "digest values 14 and 15" of the files "#14" and "#15". The generation unit 147 describes the "digest values14 and 15" as the digests of the files "#14" and "#15" in the list B1 of the collation information Rxx. Because the digest values of the files "#11" and "#12" are described in the common list J1 of the common definition information Gx, the generation unit 147 describes these "digest values11 and 12" in the list B1 of the collation information Rxx.

Next, a case in which the generation unit 147 creates the list B2 of the collation information Rxx will be described. The generation unit 147 performs the following determination processing on the files defined to be described in the list B2 of the collation information Rxx in the common list J2 of the common definition information Gx by referring to the list Wc2 of the individual definition information Lxx.

The generation unit 147 determines whether the file to which "F" is added as the essential flag, which is the element attribute E1 in the common list J2 of the common definition information Gx, is arranged by referring to the list Wc2 of the individual definition information Lxx, as in the case of the list B1 of the collation information Rxx.

For example, because the file "#22" that is the flag "F" of the common definition information Gx is set to "arrangement required" in the list Wc2 of the individual definition information Lxx, the generation unit 147 determines that the file "#22" is to be arranged in the list B2. On the other hand, because the file "#23" that is the flag "F" of the common definition information Gx is set to "arrangement not required" in the individual definition information Wc1, the generation unit 147 determines that the file "#23" is not to be arranged in the list B2.

The generation unit 147 sets the file with the flag "F", which are determined to be arranged, and the file with the flag "T" as the files in the list B2. Specifically, the generation unit 147 determines the file "#22" having the flag "F" and the file "#21" having the flag "T", which are determined to be arranged, to be files in the list B2.

Subsequently, the generation unit 147 determines a file path notation satisfying the file path condition of the common list J2 of the common definition information Gx with respect to these files. The generation unit 147 describes the file path described according to the determined notation as the file path of the list B2.

That is, the generation unit 147 determines, for the files "#21" and "#22", "file path notations (individual elements) 21 and 22" of the list Wc2 of the individual definition information Lxx to be a file path notation "file paths 21 and 22" satisfying "file path conditions 21 and 22" of the common definition information Gx, and describes the file path notations "file paths 21 and 22" in the list B2 of the collation information Rxx.

Next, a case in which the generation unit 147 creates the list B3 of the collation information Rxx will be described. The generation unit 147 performs the following determination processing on the directories defined to be described in the list B3 of the collation information Rxx in the common list J3 of the common definition information Gx by referring to the list Wc3 of the individual definition information Lxx.

In this case, the generation unit 147 determines a directory path notation satisfying the directory path condition of the common list J3 of the common definition information Gx, and sets the directory path described according to the determined notation to be the directory path of the list B3 of the collation information Rxx.

That is, the generation unit 147 determines, for the directories "#31" and "#32", "directory path notations (individual elements) 31 and 32" of the list Wc3 of the individual definition information Lxx to be a directory path notation "directory paths 31 and 32" satisfying "directory path conditions 31 and 32" of the common definition information Gx, and describes the directory path notations "directory paths 31 and 32" in the list B3 of the collation information Rxx.

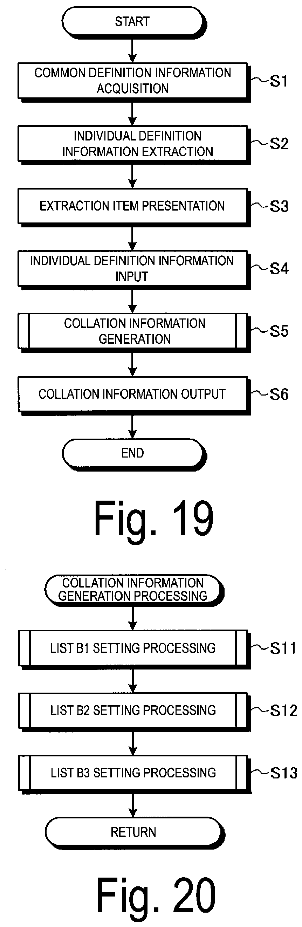

Processing Procedure of Processing of Generating Collation Information Next, a processing procedure of processing of generating collation information in the file management device 5 will be described. Fig. 19 is a flowchart of a processing procedure of the processing of generating collation information according to the embodiment.

As illustrated in Fig. 19, first, the common definition information acquisition unit 144 acquires at least part of the shared common definition information stored in the common definition information DB 2 (step S1). The individual definition item extraction unit 145 extracts the item to be defined as the individual definition information 125 from the common definition information 123 acquired by the common definition information acquisition unit 144 (step S2). The individual definition information input unit 146 presents the item that the individual definition item extraction unit 145 has extracted from the common definition information 123 (step S3) and receives an input of the individual definition information (step S4).

The generation unit 147 refers to the individual definition information 125 based on the common list and the element attribute of the common definition information 123 and performs generation processing of generating the collation information 122 (step S5). The generation unit 147 outputs the generated collation information 122 (step S6).

Processing Procedure of Processing of Generating Collation Information Next, the processing procedure of the processing of generating collation information (step S5) will be described. Fig. 20 is a flowchart of a processing procedure of the processing of generating collation information illustrated in Fig. 8.

As illustrated in Fig. 20, the generation unit 147 performs list B1 setting processing (step S11) for setting description content of the list B1 of the collation information 122 based on the common definition information 123 and the individual definition information 125 as the processing of generating collation information. Subsequently, the generation unit 147 performs list B2 setting processing (step S12) for setting description content of the list B2 of the collation information 122. Subsequently, the generation unit 147 performs list B3 setting processing (step S13) for setting description content of the list B3 of the collation information 122.

### Processing Procedure of List B1 Setting Processing

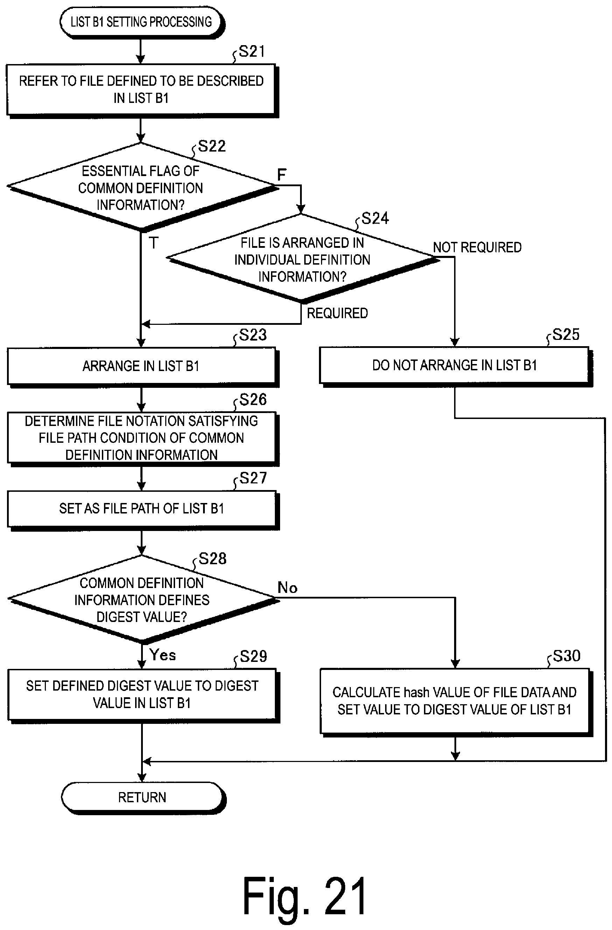

Next, a processing procedure of the list B1 setting processing (step S11) will be described. Fig. 21 is a flowchart of a processing procedure of the list B1 setting processing illustrated in Fig. 20.

The generation unit 147 refers to the file defined to be described in the list B1 of the collation information 122 in the common list J1 of the common definition information 123 (step S21). The generation unit 147 determines, for each file, whether the essential flag of the common definition information 123 is "T" or "F" (step S22).

When the generation unit 147 determines that the essential flag of the common definition information 123 of this file is "T" (step S22: T), the generation unit 147 determines that this file is to be arranged in the list B1 of the collation information 122 (step S23).

On the other hand, when the generation unit 147 determines that the essential flag of the common definition information 123 of the file is "F" (step S22: F), the generation unit 147 determines whether arrangement of the file in the list B1 is "required" or "not required" in the individual definition information 125 (step S24).

When the generation unit 147 determines that the arrangement of the file in the list B1 is "required" in the individual definition information 125 (step S24: Required), the generation unit 147 determines that this file is arranged in the list B1 of the collation information 122 (step S23). On the other hand, when the generation unit 147 determines that the arrangement of this file in the list B1 is "not required" in the individual definition information 125 (step S24: Not required), the generation unit 147 determines that this file is not arranged in the list B1 of the collation information 122 (step S25).

After step S23, the generation unit 147 determines a file path notation satisfying the file path condition of the common list J1 of the common definition information 123 with respect to the file determined to be arranged in the list B1 (step S26). The generation unit 147 sets the file path described according to the determined notation as the file path of the list B1 of the collation information 122 (step S27).

The generation unit 147 determines whether the common definition information 123 defines a digest value with respect to the files that are arranged (step S28). When the generation unit 147 determines that the common definition information 123 defines the digest value (step S28: Yes), the generation unit 147 sets the digest value defined in the common definition information 123 as the digest value of the list B1 of the collation information 122 for this file (step S29). On the other hand, when the generation unit 147 determines that the common definition information 123 does not define the digest value (step S28: No), the generation unit 147 calculates the hash value of the file data of this file and sets the calculated hash value as the digest value of the list B1 of the collation information 122 (step S30).

### Processing Procedure of List B2 Setting Processing

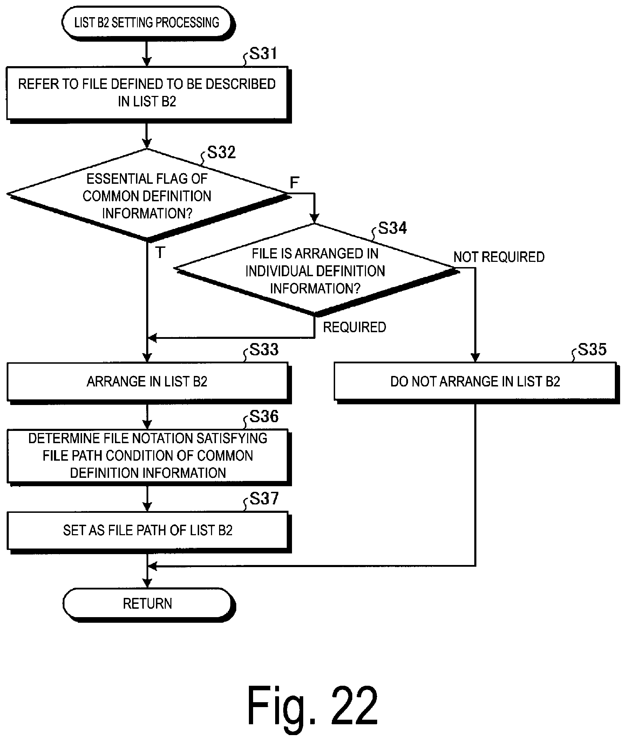

Next, a processing procedure of the list B2 setting processing (step S12) will be described. Fig. 22 is a flowchart of a processing procedure of the list B2 setting processing illustrated in Fig. 20.

The generation unit 147 refers to the file defined to be described in the list B2 of the collation information 122 in the common list J2 of the common definition information 123 (step S31). The generation unit 147 determines, for each file, whether the essential flag of the common definition information 123 is "T" or "F" (step S32).

When the generation unit 147 determines that the essential flag of the common definition information 123 of this file is "T" (step S32: T), the generation unit 147 determines that this file is to be arranged in the list B2 of the collation information 122 (step S33).

On the other hand, when the generation unit 147 determines that the essential flag of the common definition information 123 of the file is "F" (step S32: F), the generation unit 147 determines whether arrangement of the file in the list B2 is "required" or "not required" in the individual definition information 125 (step S34).

When the generation unit 147 determines that the arrangement of the file in the list B2 is "required" in the individual definition information 125 (step S34: Required), the generation unit 147 determines that this file is arranged in the list B2 of the collation information 122 (step S33). On the other hand, when the generation unit 147 determines that the arrangement of this file in the list B2 is "not required" in the individual definition information 125 (step S34: not required), the generation unit 147 determines that this file is not arranged in the list B2 of the collation information 122 (step S35).

After step S33, the generation unit 147 determines a file path notation satisfying the file path condition of the common list J3 of the common definition information 123 with respect to the file determined to be arranged in the list B3 (step S36). The generation unit 147 sets the file path described according to the determined notation as the file path of the list B3 of the collation information 122 (step S37).

### Processing Procedure of List B3 Setting Processing

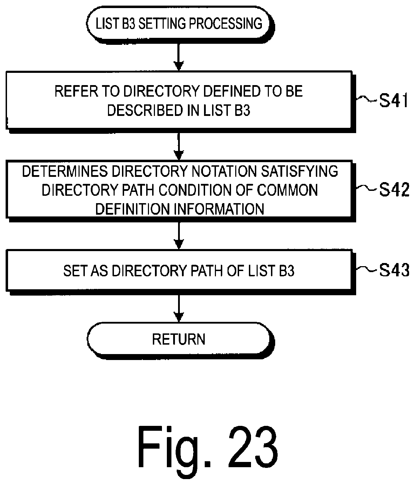

Next, a processing procedure of the list B3 setting processing (step S13) will be described. Fig. 23 is a flowchart of a processing procedure of the list B3 setting processing illustrated in Fig. 20.

First, the generation unit 147 refers to a directory defined to be described in the list B3 of the collation information 122 in the common list J3 of the common definition information 123 (step S41). The generation unit 147 determines the directory path notation satisfying the directory path condition of the common list J3 of the common definition information 123 for each of the directories defined to be described (step S42). The generation unit 147 sets the directory path described according to the determined notation as the directory path of the list B3 of the collation information 122 (step S43).

Thus, the collation information generation device 4 generates the collation information 122 suitable for this file management device 5 based on at least a part of the common definition information 123 acquired by the common definition information acquisition device 3. That is, the file management device 5 according to the present embodiment generates collation information satisfying both the individual definition information 125 and the common definition information 123 using the individual definition information 125 indicating the conditions to be individually provided according to the file management device 5, in addition to the shared common definition information.

A case in which the individual definition information 125 is input from outside the collation information generation device 4 has been described as an example, it is not limited thereto. The individual definition information 125 may be generated by the collation information generation device 4. For example, the collation information generation device 4 automatically sets a value to be set as the individual definition information according to a state of the file present in the file management device 5.

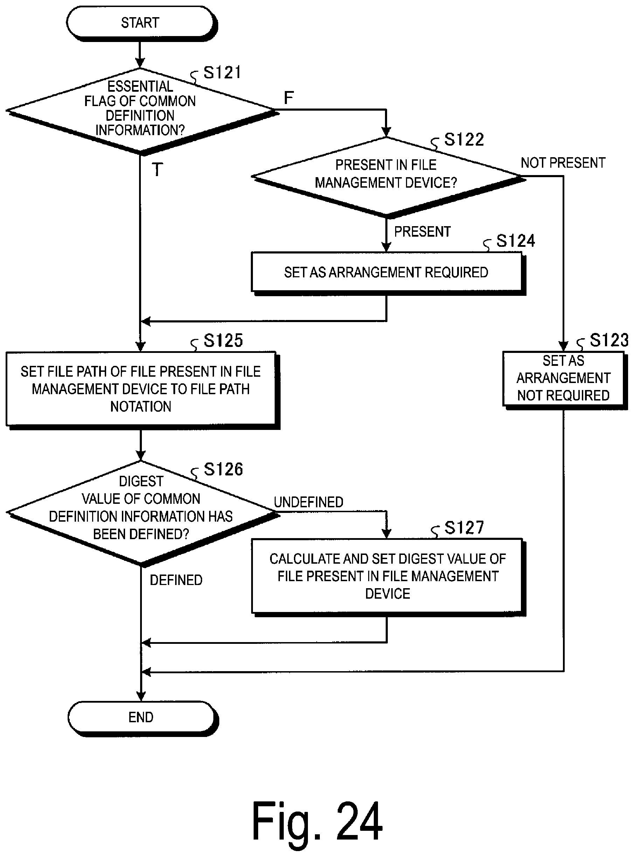

Specifically, the individual definition information setting processing that is executed by the collation information generation device 4 will be described with reference to Fig. 24. Fig. 24 is a flowchart illustrating a processing procedure of individual definition information setting processing that is executed by the collation information generation device 4.

As illustrated in Fig. 24, the collation information generation device 4 determines whether the essential flag of the common definition information is T or F (step S121). This determination corresponds to target items of the lists B1 and B2. When the collation information generation device 4 determines that the essential flag of the common definition information is F (step S121: F), the collation information generation device 4 determines whether a corresponding file is present in the file management device 5 (step S122). When the collation information generation device 4 determines that the corresponding file is not present in the file management device 5 (step S122: not present), the collation information generation device 4 sets "arrangement not required" (step S123).

On the other hand, when the collation information generation device 4 determines that the corresponding file is present in the file management device 5 (step S122: present), the collation information generation device 4 sets "arrangement required" (step S124). Subsequently, when the collation information generation device 4 determines that the essential flag of the common definition information is T (step S121: T) or after the processing of step S124, the collation information generation device 4 sets the file path of the file present in the file management device 5 in the file path notation (step S125). This processing is processing of setting a file/directory path of the corresponding file/directory corresponding to a notation of the target items of the lists B1, B2, and B3 and present in the file management device 5.

Subsequently, the collation information generation device 4 determines whether the digest value of the common definition information is defined or undefined (step S126). This determination corresponds to the target item of the list B1.

When the collation information generation device 4 determines that the digest value of the common definition information is defined (step S126: defined), the collation information generation device 4 ends the processing. On the other hand, when the collation information generation device 4 determines that the digest value of the common definition information is undefined (step S126: undefined), the collation information generation device 4 calculates the digest value of the corresponding file present on the file management device, and sets a value of the calculation result (step S127).

### Configuration of File Management Device

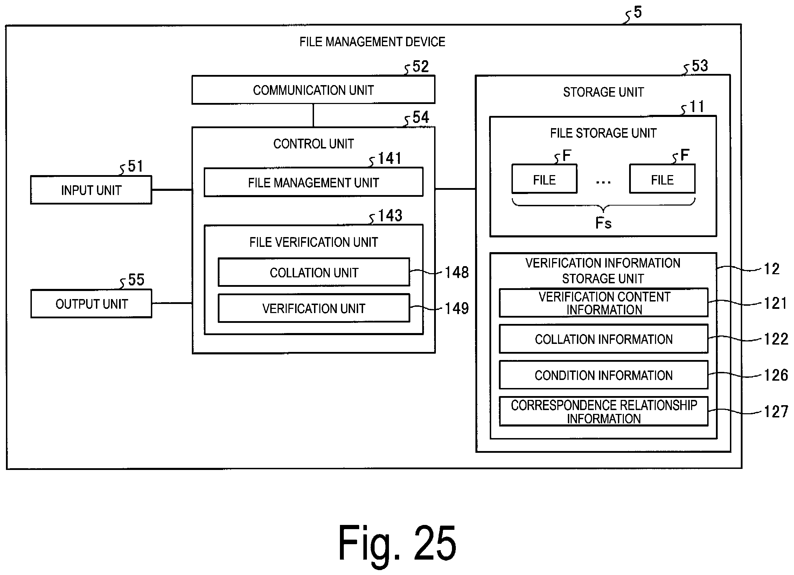

Next, the file management device 5 will be described. Fig. 25 is a schematic diagram illustrating a schematic configuration of the file management device 5. The file management device 5 includes an input unit 51, a communication unit 52, a storage unit 53, a control unit 54, and an output unit 55. The input unit 51, the communication unit 52, the storage unit 53, the control unit 54, and the output unit 55 have the same functions as the input unit 11, the communication unit 12, the storage unit 13, the control unit 14, and the output unit 15. The communication unit 52 receives the collation information Rxx output from the collation information generation device 4.

The storage unit 43 includes a file storage unit 11 and the verification information storage unit 12. The file storage unit 11 arranges a plurality of file sets Fs consisting of a plurality of files F. The file set Fs is, for example, a file set constituting a software package, as described above.

The verification information storage unit 12 stores information to be used by the control unit 54 to verify the integrity of the file. The verification information storage unit 12 has verification content information 121, collation information 122, condition information 126, and correspondence relationship information 127.

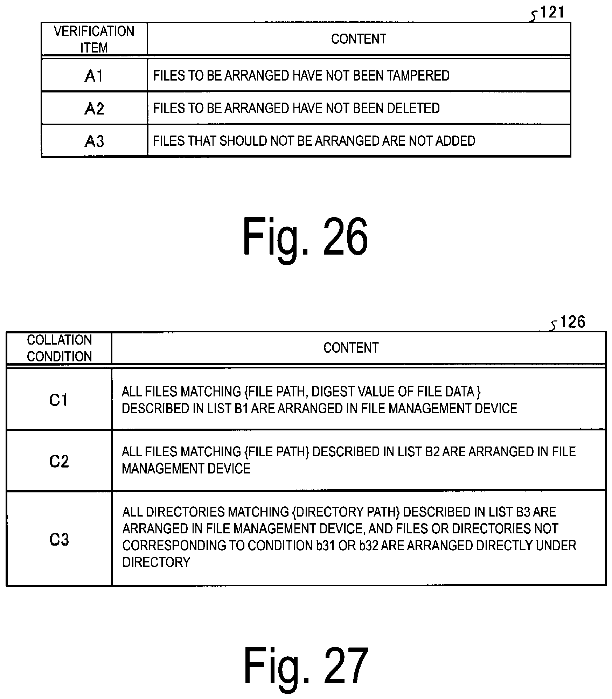

First, the verification content information 121 will be described. Fig. 26 is a diagram illustrating an example of a data structure of the verification content information 121 illustrated in Fig. 25. The verification content information 121 is associated with verification items and content thereof, as illustrated in Fig. 26. Here, the file set that should be arranged is a file set in a state in which unauthorized tampering (due to attack or misoperation), addition, deletion, or the like of a program or a setting file is not performed on a software package. On the other hand, the file set arranged in the file management device 5 is likely not to maintain this state. Thus, in the file management device 5, it becomes necessary to perform integrity verification.

In the file management device 5, verification items A1 to A3 illustrated in Fig. 26 are set as verification content of the integrity. Specifically, the verification item A1 (first verification content) is that the files that should be arranged in the file storage unit 11 have not been tampered with. The verification item A2 (second verification content) is that the files that should be arranged in the file storage unit 11 has not been deleted. The verification item A3 (third verification content) is that the files that should be not arranged in the database are not added. The file management device 5 verifies all or at least one of the verification items A1 to A3.

The collation information 122 is generated by the collation information generation device 4 as the collation information corresponding to the file set managed by the file management device 5. The collation information 122 is omitted because the collation information 122 has been described above.

Next, the condition information 126 will be described. The condition information 126 is information indicating a collation condition to be used by the file management device 5 when the file set Fs arranged in the file storage unit 11 is collated with the collation information 122 and a determination is made as to whether the verification content is satisfied.

Fig. 27 is a diagram illustrating the condition information 126 illustrated in Fig. 25. The file management device 5 uses collation conditions C1 (first collation condition), collation condition C2 (second collation condition), and collation condition C3 (third collation condition) as collation conditions, as illustrated in Fig. 27.

The collation condition C1 is that all files matching a combination of the file path and the digest value of the file data shown in the list B1 are arranged in the file management device 5. The collation condition C2 is that all the files matching the file path indicated by the list B2 are arranged in the file management device 5. The collation condition C3 is that all directories matching directory paths indicated by the list B3 are arranged in the file management device 5, and files or directories not corresponding to the directory condition b31 or the directory condition b32 are not arranged directly under all the directories. The file management device 5 determines whether at least one of the collation conditions C1 to C3 is satisfied.

The correspondence relationship information 127 is information indicating a correspondence relationship between the verification items A1 to A3 and the lists B 1 to B3 of the collation information 122 required therefor. The correspondence relationship information 127 indicates that all of the lists B 1 to B3 are necessary when all of the verification items A1 to A3 are verified. Further, when any one of the verification items A1 to A3 is verified, it is shown that only a part of the lists B 1 to B3 is sufficient.

Thus, the file management device 5 may refer to the correspondence relationship information 127 and extract only the lists B 1 to B3 required according to the presence or absence of verification of the verification items A1 to A3 from shared information Rs1 to Rs3 in shared information DB 2. That is, the file management device 5 may acquire a list to be used for the verification item that is verified by the file management device 5 in the shared information Rs1 to Rs3 in the shared information DB 2. In the embodiment, a case in which the file management device 5 verifies all the verification items A1 to A3 will be described as an example.

The control unit 54 includes a file management unit 141 and the file verification unit 143. The file management unit 141 identifies the file data of the files in the file storage unit 11 that is a management target using the file paths, classifies the file paths using the directories, and identifies the directory using the directory path.

The file verification unit 143 verifies the integrity of the file in the file storage unit 11 using at least a part of shared collation information. The file verification unit 143 determines collation information to be used for verification according to a file set that is a verification target, and verifies the integrity of the files arranged in the file storage unit 11. The file verification unit 143 includes a collation unit 148 and a verification unit 149.

The collation unit 148 perform any one of collation of the file path of the file arranged in the file storage unit 11 with the file path indicated by the collation information 12, collation of the digest value of the file data of the file arranged in the file storage unit 11 with the digest value of the file data indicated by the collation information 122, and collation of the directory path of the file arranged in the file storage unit 11 with the directory path indicated by the collation information 122. Then, the collation unit 148 determines whether at least one of the collation condition C1, the collation condition C2, or the collation condition C3 is satisfied.

The verification unit 149 verifies at least one of the verification items A1 to A3 based on a collation result of the collation unit 148. The verification unit 149 determines that the verification item A1 is satisfied when the collation condition C1 is satisfied with respect to the files arranged in the file storage unit 11, determines that the verification item A2 is satisfied when the collation condition C1 and the collation condition C2 are satisfied with respect to the files arranged in the file storage unit 11, and determines that the verification item A3 is satisfied when the collation condition C3 is satisfied with respect to the files arranged in the file storage unit 11. In the present embodiment, a case in which the file management device 5 determines all the collation conditions C1 to C3 and verifies all the verification items A1 to A3 for the files of the file set that is a management target will be described.

### Processing of Collation Unit

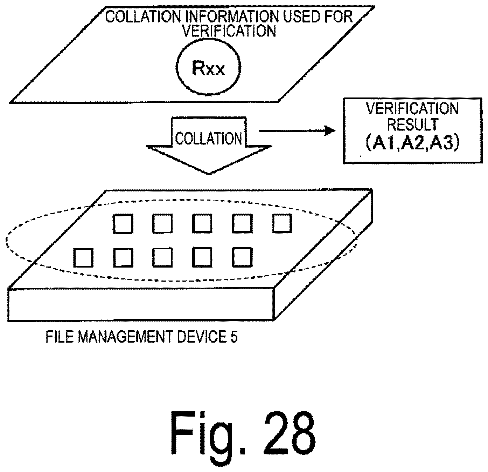

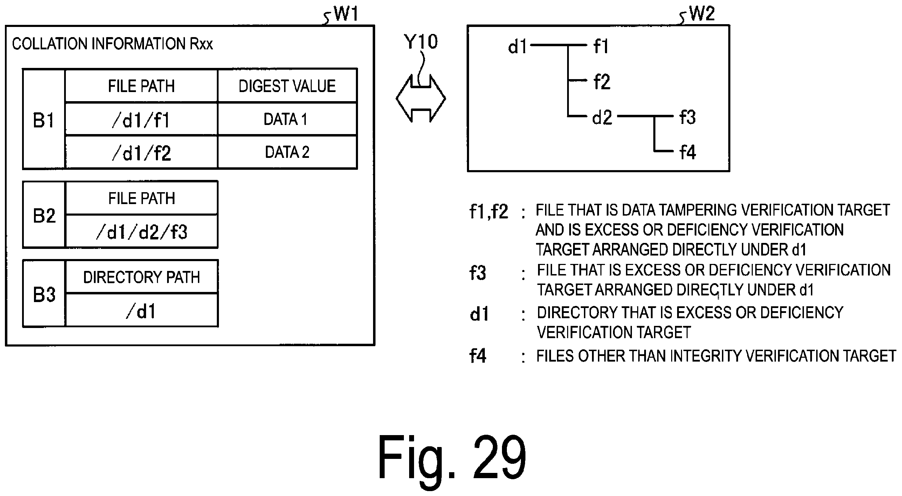

Next, processing of the collation unit 148 will be described. Figs. 28 and 29 are diagrams illustrating processing of the collation unit 148 illustrated in Fig. 25. A case in which the collation unit 148 first determines the collation information Rxx to be used for verification, and outputs a verification result for the verification items A1 to A3 using the collation information Rxx as illustrated in Fig. 28 will be described as an example. For example, the collation unit 148 verifies whether the file that is a verification target arranged in the file management device 5 satisfies all the conditions described in the collation information Rxx.

Here, the arrangement of the files and directories that are verification targets is as shown in a frame W2 on the right side of Fig. 29. Specifically, files f1 and f2 are files of data tampering verification (verification item A1) targets and also excess/deficiency verification (verification item A2) targets arranged directly under a directory d1. A file f3 is a file of excess/deficiency verification (verification item A2) target directly under the directory d1. The directory d1 is a directory of the excess/deficiency verification (verification item A3) target. A file f4 is a file other than a file integrity verification target.

An example of the collation information Rxx set for the file set having such an arrangement is illustrated in a frame W1 on the left side of Fig. 29. In the collation information Rxx, a combination of the file path and the directory valueof the files f1 and f2 that are data tampering verification targets is described in the list B1, as illustrated in Fig. 29. In the collation information Rxx, a file path of the file f3 that is an excess/deficiency verification target is described in the list B2, and a directory path of the directory d1 that is an excess/deficiency verification target is described in the list B3. A directory d2 in the frame W2 is not described in the list B3 because the file f4 not described in the lists B 1 and B2 is arranged directly under the directory d2. Because the number of files arranged directly under the directory is likely to increase or decrease as a result of a normal operation of the application, a directory directly under which only the files described in the lists B1 and B2 are arranged is not necessarily described in the list B3.

The collation unit 148 collates description content of each list of the collation information Rxx with the file paths, the digest values, and the directories of the files f1 to f4 (see arrow Y10). The verification unit 149 verifies whether the verification target file satisfies all the verification items A1 to A3 based on the collation result.

Here, specific processing of the collation unit 148 will be described. First, the collation unit 148 determines whether the collation condition C1 is satisfied with respect to the files f1 and f2 described in the list B1 among verification targets. In this case, the collation unit 148 verifies whether a file path "/d1/f1" described in the list B1 of the collation information Rxx is arranged in the file management device 5. In the collation unit 148, in the case of an example of Fig. 29, the file path "/d1/f1" described in the list B1 of the collation information Rxx is arranged in the file management device 5. Thus, the collation unit 148 calculates a hash value of a "/d1/f1" file of the file management device 5 and collates the hash value with a digest value "data 1" described in the list B1 of the collation information Rxx.

Subsequently, the collation unit 148 verifies that a file path "/d1/f2" described in the list B1 of the collation information Rxx is arranged in the file management device 5, calculates a hash value of a "/d1/f2 file" of the file management device 5 when the collation unit 148 verifies that the file path "/d1/f2" is arranged, and collates the hash value with the digest value "data 2" described in the list B1 of the collation information Rxx. The collation unit 148 determines that the collation condition C1 is satisfied when the calculated hash value and the digest value of the list B1 match in any case.

Then, the collation unit 148 determines whether the file f3 described in the list B2 among the verification targets satisfies the collation condition C2. In this case, the collation unit 148 verifies that a file path "/d1/d2/f3" described in the list B2 of the collation information Rxx is arranged in the file management device 5. In the example of Fig. 29, because the collation unit 148 can verify that the file path "/d1/d2/f3" described in the list B2 of the collation information Rxx is arranged, the collation unit 148 determines that the collation condition C2 is satisfied.

Next, the collation unit 148 determines whether a directory path "/d1" described in the list B3 satisfies the collation condition C3. In this case, the collation unit 148 verifies that the directory path "/d1" described in the list B3 of the collation information Rxx is arranged in the file management device 5. In the example of Fig. 29, the collation unit 148 verifies that the directory path "/d1" described in the list B3 of the collation information Rxx is arranged in the file management device 5.

The collation unit 148 verifies the following for the files {d1/f1 and d1/f2} arranged directly under "/d1" on the file management device 5. First, the collation unit 148 determines whether the files "/d1/f1" and "/d1/f2" arranged directly under "/d1" are files described in the list B1 or the list B2 of the collation information Rxx. In the example of Fig. 29, both of the files "/d1/f1" and "/d1/f2" arranged directly under "/d1" are file paths described in the list B1 of the collation information Rxx. Thus, the collation unit 148 can determine that the files "/d1/f1" and "/d1/f2" arranged directly under "/d1" are the files described in the list B1 of the collation information Rxx.

Subsequently, the collation unit 148 verifies that the directory "/d1/d2" arranged directly under "/d1" is a directory path directly under which the files described in the list B1 or the list B2 of the collation information Rxx are arranged. In the case of Fig. 29, the file f3 described in the list B2 is arranged under the directory "/d1/d2". Thus, it is verified that the directory "/d1/d2" arranged directly under "/d1" is the directory path under which the files described in the list B2 of the collation information Rxx are arranged. That is, in the example of Fig. 29, because the files arranged directly under the directory "/d1" all satisfy the directory conditions b31 and b32, the collation unit 148 determines that the collation condition C3 is satisfied. The collation unit 148 outputs such a collation result to the verification unit 149.

### Processing of Verification Unit

Next, processing of the verification unit 149 for the example of Fig. 29 will be described. The verification unit 149 performs verification on the verification items A1 to A3 based on the collation result of the collation unit 148.

First, the verification unit 149 determines that the verification item A1 is satisfied when the files arranged in the file management device 5 satisfy the collation condition C1 for all the lists described in the list B1 of the collation information Rxx. That is, the verification unit 149 determines that the files that should be arranged have not been tampered with. On the other hand, the verification unit 149 determines that the verification item A1 is not satisfied when the files arranged in the file management device 5 do not satisfy the collation condition C1 for all the lists described in the list B1 of the collation information Rxx. That is, the verification unit 149 determines that the files that should be arranged have been tampered with.

Then, the verification unit 149 determines that the verification item A2 is satisfied when the files arranged in the file management device 5 satisfy the collation condition C1 for all the lists described in the list B1 of the collation information Rxx and satisfy the collation condition C2 for all the lists in the list B2 of the collation information Rxx. That is, the verification unit 149 determines that the files that should be arranged have not been deleted. On the other hand, the verification unit 149 determines that the verification item A2 is not satisfied when the files arranged in the file management device 5 do not satisfy the collation condition C1 for all the lists described in the list B 1 of the collation information Rxx and do not satisfy the collation condition C2 for all the lists described in the list B2 of the collation information Rxx. That is, the verification unit 149 determines that the files that should be arranged have been deleted.

The verification unit 149 determines that the verification item A3 is satisfied when the files arranged in the file management device 5 satisfy the collation condition C3 for all the lists described in the list B3 of the collation information Rxx. That is, the verification unit 149 determines that the files that should be not arranged are not added. On the other hand, the verification unit 149 determines that the verification item A3 is not satisfied when the files arranged in the file management device 5 do not satisfy the collation condition C3 for all the lists described in the list B3 of the collation information Rxx. That is, the verification unit 149 determines that the files that should be not arranged are added.

The file management device 5 may register a plurality of pieces of collation information Rx1, Rx2, Rx3, and perform collation and verification on the plurality of pieces of collation information sequentially or simultaneously. Further, the file management device 5 may register an order or time of integrity verification for one or a plurality of pieces of collation information in a scheduler function or the like in advance, and automatically perform collation and verification. Further, the file management device 5 may generate a log, an alarm, or the like based on a verification result and take measures such as prohibiting access to an erroneous file.

### Processing Procedure of File Verification Processing

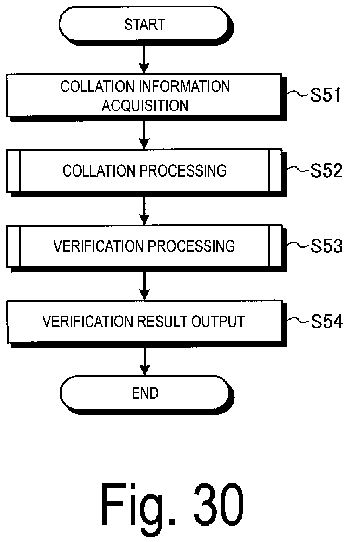

Next, a processing procedure of the file verification processing in the file management device 5 will be described. Fig. 30 is a flowchart of a processing procedure of the file verification processing according to the embodiment.

First, in the file management device 5, the file management unit 141 executes file management processing for identifying file data of files that are management targets using file paths, classifying the file paths using directories, and identifying directories using directory paths. Further, the file verification unit 143 acquires the collation information 122 to be used for verification of the file set from the verification information storage unit 12 (step S51) and stores the collation information in the verification information storage unit 12.

The collation unit 148 determines the collation information 122 to be used for verification according to the file set that is a verification target, and performs collation processing (step S52). The collation processing is processing of performing any one of collation of the file path of the arranged file with the file path indicated by the collation information 122, collation of the digest value of the file data of the arranged file with the digest value of the file data indicated by the collation information 122, and collation of the directory path of the arranged file with the directory path indicated by the collation information 122 when a predetermined verification timing is reached.

Subsequently, the verification unit 149 performs verification processing for verifying at least one of the verification items A1 to A3 based on the collation result of the collation unit 148 (step S53), and the communication unit 13 or the output unit 16 outputs a verification result (step S54).

### Processing Procedure of Collation Processing

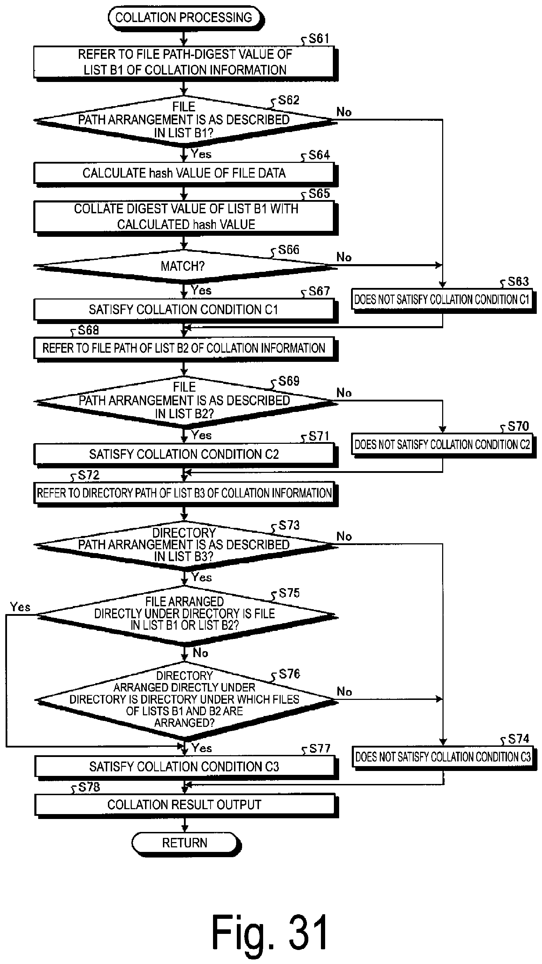

Next, a processing procedure of the collation processing (step S52) will be described. Fig. 31 is a flowchart illustrating the processing procedure of the collation processing illustrated in Fig. 30.

As illustrated in Fig. 31, the collation unit 148 refers to a combination of the file path and the digest value of the list B1 of the collation information 122 (step S61). The collation unit 148 verifies whether all files matching the file path described in the list B1 are arranged in the file management device 5 (step S62).

When the collation unit 148 verifies that all the files matching the file path described in the list B1 are not arranged in the file management device 5 (step S62: No), the collation unit 148 determines that the files arranged in the file management device 5 do not satisfy the collation condition C1 (step S63).

On the other hand, when the collation unit 148 verifies that all the files matching the file paths described in the list B1 are arranged in the file management device 5 (step S62: Yes), the collation unit 148 calculates a hash value of the file data of each file arranged in the file management device 5 (step S64). Then, the collation unit 148 collates the digest value of the list B1 with the calculated hash value for each file (step S65). The collation unit 148 determines whether the digest value of the list B1 and the calculated hash value match for all files (step S66).

When the collation unit 148 determines that the digest value of the list B1 and the calculated hash value do not match for all the files (step S66: No), the collation unit 148 determines that the files do not satisfy the collation condition C1 (step S63). On the other hand, when the collation unit 148 determines that the digest value of the list B1 and the calculated hash value match for all the files (step S66: Yes), the collation unit 148 determines that the files satisfy the collation condition C1 (step S67).

Subsequently, the collation unit 148 refers to the file path of the list B2 of the collation information 122 (step S68). The collation unit 148 determines whether all the file paths described in the list B2 are arranged in the file set that is a verification target in the file management device 5 (step S69). When the collation unit 148 determines that all the file paths described in the list B2 are not arranged (step S69: No), the collation unit 148 determines that the collation condition C2 is not satisfied (step S70). On the other hand, when the collation unit 148 determines that all the file paths described in the list B2 are arranged (step S69: Yes), the collation unit 148 determines that the collation condition C2 is satisfied (step S71).

Subsequently, the collation unit 148 refers to the directory path of the list B3 of the collation information 122 (step S72). The collation unit 148 determines whether all the directory paths of the list B3 of the collation information 122 are arranged in the file management device 5 (step S73). When the collation unit 148 determines that all the directory paths of the list B3 of the collation information 122 are arranged in the file management device 5 (step S73: Yes), the collation unit 148 determines whether the file arranged directly under the directory is a file described in the list B1 or the list B2 of the collation information 122 (step S75).

When the collation unit 148 determines that the file arranged directly under the directory is not the file described in the list B1 or the list B2 of the collation information 122 (step S75: No), the collation unit 148 determines whether a directory arranged directly under a directory is a directory under which one or more files described in the lists B1 and B2 are arranged (step S76).

The collation unit 148 determines that the collation condition C3 is not satisfied in both of the following cases (step S74). A first case is a case in which a determination is made that all the directory paths of the list B3 of the collation information 122 are not arranged in the file management device 5 (step S73: No). A second case is a case in which a determination is made that a directory arranged directly under a directory is not a directory under which one or more files described in the lists B1 and B2 are arranged (step S76: No).

On the other hand, the collation unit 148 determines that the collation condition C3 is satisfied in any of the following cases (step S77). A first case is a case in which a determination is made that files arranged directly under the directory are files described in the list B1 or the list B2 of the collation information 122 (step S75: Yes). A second case is a case in which a determination is made that a directory arranged directly under a directory is a directory under which one or more files described in the lists B1 and B2 are arranged (step S76: Yes). The collation unit 148 outputs a collation result for the collation conditions C1 to C3 to the verification unit 149 (step S78).

### Processing Procedure of Verification Processing

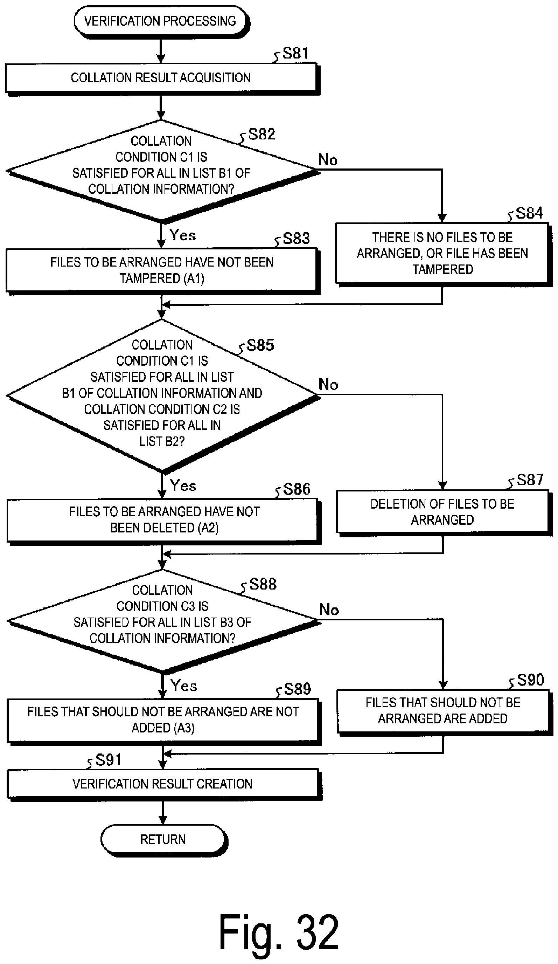

Next, a processing procedure of the verification processing (step S53) will be described. Fig. 32 is a flowchart illustrating the processing procedure of the verification processing illustrated in Fig. 30.

As illustrated in Fig. 32, when the verification unit 149 acquires the collation result of the collation unit 148 (step S81), the verification unit 149 determines whether the files arranged in the file management device 5 satisfy the collation condition C1 for all the lists described in the list B1 of the collation information 122 (step S82). When the verification unit 149 determines that the collation condition C1 is satisfied with respect to all the lists described in the list B1 of the collation information 122 (step S82: Yes), the verification unit 149 verifies that the files that should be arranged have not been tampered with (verification item A1) (step S83). On the other hand, when the verification unit 149 determines that the collation condition C1 is not satisfied for all the lists described in the list B1 of the collation information 122 (step S82: No), the verification unit 149 verifies that there are not files that should be arranged or the files that should be arranged have been tampered with (step S84).

The verification unit 149 determines whether the files arranged in the file management device 5 satisfy the collation condition C1 for all the lists described in the list B1 of the collation information 122 and satisfy the collation condition C2 for all the lists described in the list B2 of the collation information 122 (step S85).

When the verification unit 149 determines that the files arranged in the file management device 5 satisfy the collation condition C1 for all the lists described in the list B1 of the collation information 122 and satisfy the collation condition C2 for all the lists described in the list B2 of the collation information 122 (step S85: Yes), the verification unit 149 determines that the files that should be arranged have not been deleted (verification item A2) (step S86). On the other hand, when the verification unit 149 determines that the files arranged in the file management device 5 satisfy the collation condition C1 for all the lists described in the list B1 of the collation information 122 and do not satisfy the collation condition C2 for all the lists described in the list B2 of the collation information 122 (step S85: No), the verification unit 149 determines that the files that should be arranged have been deleted (step S87).

The verification unit 149 determines whether the files arranged in the file management device 5 satisfy the collation condition C3 for all the lists described in the list B3 of the collation information 122 (step S88). When the verification unit 149 determines that the collation condition C3 is satisfied with respect to all the lists described in the list B3 of the collation information 122 (step S88: Yes), the verification unit 149 determines that the files that should be not arranged are not added (verification item A3) (step S89). When the verification unit 149 determines that the collation condition C3 is not satisfied for all the lists described in the list B3 of the collation information 122 (step S88: No), the verification unit 149 determines that the files that should not be arranged are added (step S90).

Subsequently, the verification unit 149 creates a verification result (step S91), outputs the verification result to the communication unit 13 or the output unit 16, and ends the verification processing.

### Effect of Embodiment

Here, the administrator can add a plurality of pieces of software all at once in a business application tar format of the related art. In this case, it becomes the burden on the developer of the software provider to ascertain detailed related software such as shared libraries without excess/deficiency and prepare the common definition information. Further, a method of collectively setting information added, deleted, and changed at the time of installation as common definition information may be considered. However, because a combination of pieces of target software is different depending on a timing such as initial introduction and version upgrade, it takes time and effort to create common definition information for coping with all variations.

Further, the shared library may be upgraded by other applications, and it is unrealistic to create the common definition information again each time. When the shared libraries are collectively provided in a tar format or the like, it is difficult for an operator using an application to ascertain all what software and libraries are actually included, and to prepare the common definition information without excess/deficiency.

When the identifier (for example, an installed software name) of the common definition information is input, the common definition information acquisition device 3 extracts (a list of) the identifier of the common definition information serving as acquisition candidates based on the identifier. The common definition information acquisition device 3 acquires the common definition information corresponding to the extracted identifier from the common definition information DB 2, and determines, through comparison, whether there is a file F on the file management device 5 satisfying the conditions for each piece of the common definition information. Subsequently, the common definition information acquisition device 3 outputs only finally necessary common definition information based on a distinction result to acquire corresponding common definition information without excess/deficiency.

Thus, the common definition information acquisition device 3 can acquire the common information of the software without excess/deficiency even when a plurality of pieces of software is installed by a provision format that does not use a package management system. The common definition information acquisition device 3 inputs the acquired common definition information to the collation information creation device 4 so that the collation information creation device 4 can efficiently create appropriate collation information while reducing the burden on the administrator.

The collation information generation device 4 generates the collation information 122 suitable for the file management device 5 based on at least a part of the common definition information 123 acquired by the common definition information acquisition device 3. That is, the file management system 1 according to the present embodiment generates collation information satisfying both the individual definition information 125 and the common definition information 123 using the individual definition information 125 indicating the conditions to be individually included according to the file management device 5, in addition to the shared common definition information.

In other words, in the file management system 1 according to the embodiment, the collation information 122 is generated using the individual definition information input by the administrator and at least part of the shared common definition information 123 acquired from the outside. Thus, with the file management system 1 according to the present embodiment, it is possible to reduce the burden on the administrator regarding creation of the collation information. This is because the information input by the administrator is only the individual definition information regarding a partially changed file or the like. This also allows a collation information creation cost of the administrator of the file management device 5 to be reduced in the present embodiment.

Thus, in the related art, there is a case in which, when some of files belonging to a software package can be changed, a software provider cannot provide accurate collation information for such files. In this case, there is a problem in that the system administrator cannot acquire collation information for partially changeable files and cannot verify the integrity of the files.

For example, in the related art, there is a case in which, when some of the file paths of the files belonging to the software package can be customized (prefix designation, wildcard designation, or the like), the software provider cannot designate file paths of the lists B 1 to B3 of the collation information of the files.

On the other hand, in the present embodiment, the software provider creates and provides the common definition information G₁, G₂, and G₃ indicating the file path condition in the element attribute E2 for the file paths of the lists B 1 to B3 of the collation information. The administrator of the file management device 5 determines the file path of the file that is a management target in a range in which the file path condition of the definition D1 of the common definition information is satisfied. The administrator of the file management device 5 designates the file paths determined in this way as the file paths of the lists B 1 to B3 of the collation information 122. Thus, in the present embodiment, the file paths of the lists B 1 to B3 of the collation information can be determined without delay.

Further, for example, in the related art, when some of the files belonging to the software package can be deleted at the time of installation (manual files or the like), the software provider cannot determine whether the files are described in the lists B2 and B3 of the collation information.

On the other hand, in the present embodiment, the software provider creates and provides an essential flag of the element attribute E2 of the common definition information with respect to the files of the lists B 1 and B2 of the collation information. The administrator of the file management device 5 determines whether to install files in which an essential flag of the definition D2 of the common definition information is "not essential (F)", and deletes files determined not to be installed from the lists B 1 and B2 of the collation information. Thus, in the present embodiment, the determination of the files to be described in the lists B 1 and B2 of the collation information can be executed without delay.

Further, for example, in the related art, there is a case in which, when some of file data belonging to the software package can be changed at the time of installation (setting file or the like), the software provider cannot designate the digest value of the file data of the list B 1 of collation information of these files.

On the other hand, in the present embodiment, the software provider creates and provides a fixed value flag that is the element attribute E3 of the common definition information with respect to the files in the list B 1 of the collation information. The administrator of the file management device 5 determines whether to change data of a file in which the fixed value flag of E3 of the common definition information is "not fixed (F)", and sets a digest value of the file determined to be changed as a digest value of the list B 1 of the collation information. Thus, in the present embodiment, the determination of the digest value of the file data of the list B 1 of the collation information can be executed without delay.

Thus, in the present embodiment, even when some of the files belonging to the software package are changed in the file management device 5, the file management device 5 can generate accurate collation information for the changed software package. Thus, according to the present embodiment, even when some of the files belonging to the software package are changed in the file management device 5, the integrity of the files can be accurately verified by using the collation information suitable for the arranged files.

Further, the file management system 1 according to the present embodiment does not need to let the software provider and the administrator of the file management device 5 determine all of the collation information. According to the present embodiment, it is possible to generate collation information suitable for the file management device 5 by the software provider and the administrator of the file management device 5 simply setting a part of information that can be supported. Thus, according to the embodiment, it is possible to reduce the burden on the software provider in addition to the administrator of the file management device 5.

Further, in the present embodiment, collation information having the list B 1 indicating a combination of a file path of a file that should be arranged and of which file data does not change and a digest value of the file data is used as the collation information 122. In the present embodiment, the administrator collates the file path of the arranged file with the file path indicated by the collation information 122, collates the digest value of the file data of the arranged file with the digest value of the file data indicated by the collation information 122, and verifies that files that should be arranged have not been tampered with. Thus, according to the present embodiment, the administrator of the file management device 5 can verify the excess and deficiency of files without burden.

In the present embodiment, a collation condition having the list B2 indicating the file paths of the files that should be arranged and of which the file data can change is used as the collation information 122. In the present embodiment, the collation information having the list B3 indicating a directory path of a directory satisfying a directory condition to be described in detail below is used as the collation information 122. The first directory condition is that files arranged directly under a directory are files described in the list B 1 or the list B2 belonging to the same collation information. The second directory condition is that a directory arranged directly under a directory is a directory under which one or more files described in the list B 1 or the list B2 belonging to the same collation information are arranged. The third directory condition is that a file or directory not corresponding to the first directory condition or the second directory condition is not arranged directly under a directory.

In the present embodiment, the administrator can perform collation on the file path of the arranged file and the file path indicated by the collation information 122, the directory path of the arranged file and the directory path indicated by the collation information 122, and the directory conditions to appropriately perform excess/deficiency verification of files of which digest values cannot be defined, such as log files, and directories.

Thus, according to the embodiment, the file management device 5 can reduce the burden on the file administrator and can accurately verify the files using the appropriate collation information according to the file that is a management target.

### Modification Example 1 of Embodiment

Although the case in which the file management device 5 verifies all the verification items A1 to A3 has been described as an embodiment, of course, the file management device 5 may select and verify any one of the verification items A1 to A3. In this case, a combination of the collation information lists to be used differs depending on the verification item of the verification target. In other words, the file management device 5 verifies the verification item A1 and at least any one of the verification items A2 and A3 according to the combination of the lists B 1 to B3 included in the acquired collation information 122.

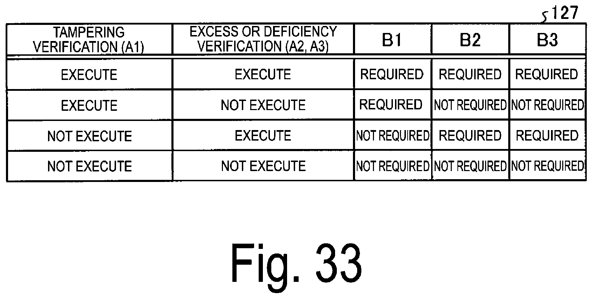

Fig. 33 is a diagram illustrating an example of a data structure of the correspondence relationship information 127 illustrated in Fig. 25. In the correspondence relationship information 127, the lists B 1 to B3 of the collation information being required or not required are associated with each other according to a combination of whether tampering verification (verification item A1) and excess/deficiency verification (verification items A2 and A3) are performed, as illustrated in Fig. 33.

As described above, when both the tampering verification (verification item A1) and the excess/deficiency verification (verification items A2 and A3) are executed, all the lists B1 to B3 of the collation information 122 are necessary, as shown in a first line method 1. Further, when only the tampering verification (verification item A1) is executed, only the list B1 is necessary as shown in a second line method 2. Further, when only the excess/deficiency verification (verification items A2 and A3) is executed, only the lists B2 and B3 are necessary as shown in a third line method 3. When neither the tampering verification (verification item A1) nor the excess/deficiency verification (verification items A2 and A3) is executed, none of the lists B 1 to B3 is required, as shown in a fourth line. Thus, the file management device 5 may acquire the necessary lists B 1 to B3 according to the combination of verification items (verification item determination method 1). On the other hand, there are a case in which all the lists B 1, B2, and B3 are not included in the collation information that can be acquired, that is, the collation information that has been created and distributed, and only the list B1 or only the lists B2 and B3 are included. In these cases, there is also a method in which the file management device 5 verifies an executable verification item (verification item determination method 2). For example, the file management device 5 verifies only the verification item A1 when the collation information includes only the list B1 and verifies only the verification items A2 and A3 when the collation information includes only the lists B2 and B3. Because the verification item determination method 1 and the verification item determination method 2 do not contradict each other, both of the methods can be implemented with one system, but a system that implements only the verification item determination method 2 may be used.

### Modification Example 2 of Embodiment

Next, Modification Example 2 of the embodiment will be described. Fig. 34 is a diagram illustrating processing of generating collation information according to Modification Example 2 of the embodiment, {prefix} is a common value in the lists B1 to B3 of the common definition information Gx, the individual definition information Cx, and the collation information Rxx, as illustrated in Fig. 34.

In the file path condition and the directory path condition of the common definition information Gx, all or some of the files or directories described in the list B1, the list B2, and the list B3 of the collation information are defined as a prefix range. In the file path condition and the directory path condition of the common definition information Gx, it is permitted to arrange the prefix range under the directory path (prefix) individually determined by the file management device 5. Further, in the file path condition and the directory path condition of the common definition information Gx, it is not permitted for the file management device 5 to individually determine paths other than the directory path (prefix).

For example, processing of creating a file path of the collation information Rxx will be described as an example. The common definition information Gx defines a part of the file path using a prefix (see (1) in Fig. 34). Further, in the individual definition information Lxx, a value of prefix isdefined (see (2) in Fig. 34). The generation unit 147 creates a file path from the definitions of the common definition information Gx and the individual definition information Lxx according to the file path condition in the common definition information Gx. Specifically, for the file "#11", the common definition information Gx defines the file path of the file "#11" as "/[prefix1]/f11". In the individual definition information Lxx, a value of prefix isdefined as "dc". The generation unit 147 creates "/dc/f11" as the file path of the file "#11" from the definitions of the common definition information Gx and the individual definition information Lxx (see (3) in Fig. 34). A plurality of prefixes can be defined in the collation information Rxx. For example, it is possible to define a file set under two directories having individually determined directory paths by defining two prefixes (for example, prefix 1, prefix2).

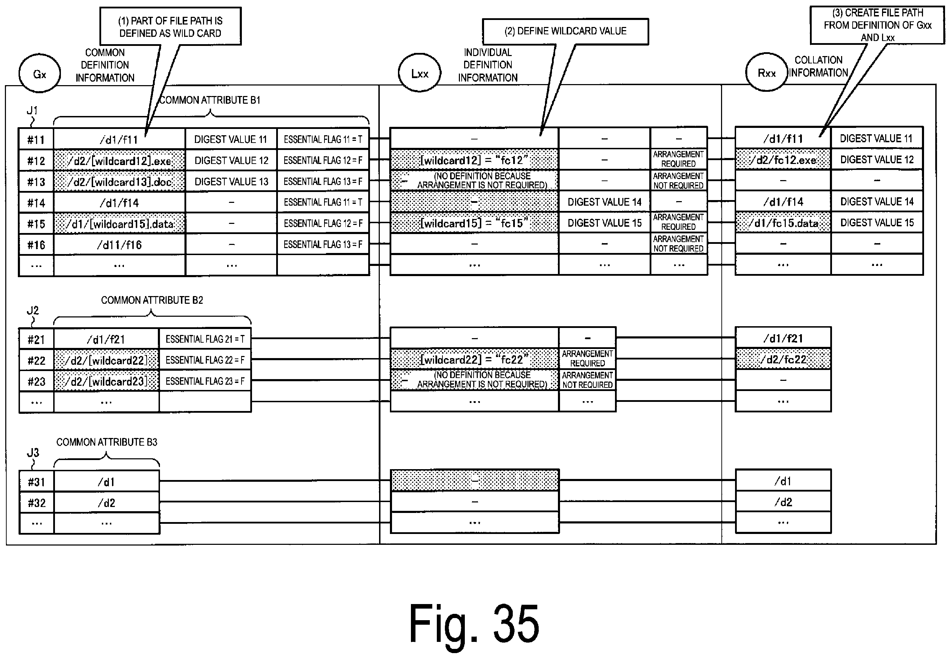

Fig. 35 is a diagram illustrating another example of the processing of generating the collation information according to Modification Example 2 of the embodiment, {wildcard} is any value in the lists B1 to B3 of the common definition information Gx, the individual definition information Cx, and the collation information Rxx, and need not be common, as illustrated in Fig. 35.

In the file path condition and the directory path condition of the common definition information Gx, a part of a character string constituting the file path or the directory path described in the list B1, the list B2, and the list B3 of the collation information are defined as a wild card part. In the common definition information Gx, it is permitted to replace the wild card part with any character string individually determined by the file management device 5. In the common definition information Gx, it is not permitted for the file management device to individually determine parts other than the wild card part.

For example, the processing of creating the file path of the collation information Rxx will be described as an example. The common definition information Gx defines a part of the file path as a wild card (see (1) in Fig. 35). Further, in the individual definition information Lxx, a value of a wild card is defined (see (2) in Fig. 35). The generation unit 147 creates a file path from the definitions of the common definition information Gx and the individual definition information Lxx according to the file path condition in the common definition information Gx (see (3) in Fig. 35). Specifically, for the file "#12", the common definition information Gx defines a file path of the file "#12" as "/d2/[wildcard12].exe". In the individual definition information Lxx, the file path of the file "#12" is defined as "[wildcard12] = "fc12". The generation unit 147 creates "/d2/fc12.exe" as the file path of the file "#12" from the definitions of the common definition information Gx and the individual definition information Lxx.

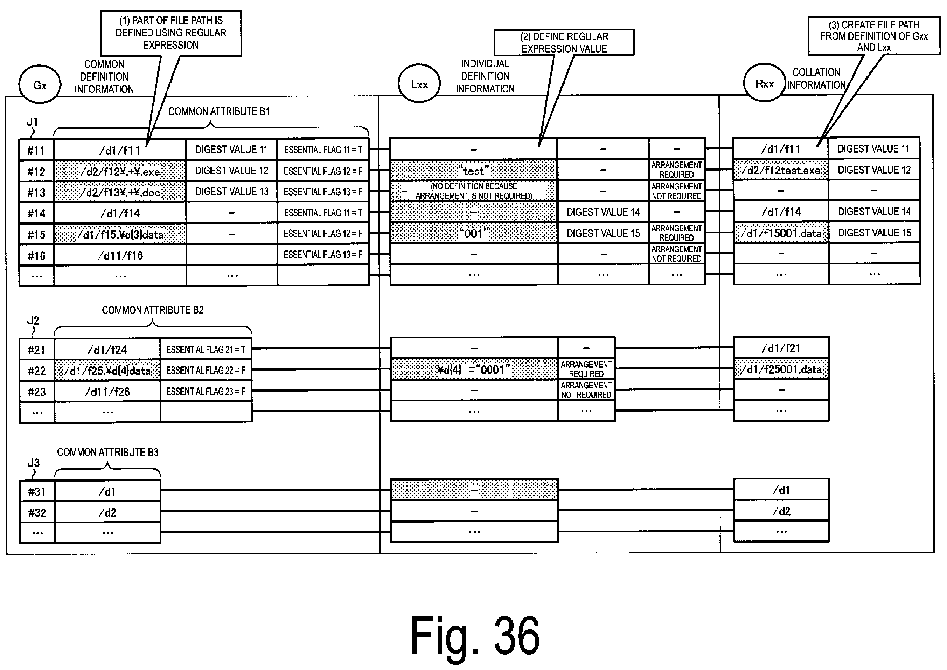

Fig. 36 is a diagram illustrating another example of the processing of generating collation information according to Modification Example 2 of the embodiment. A regular expression is any value in the lists B1 to B3 of the common definition information Gx, the individual definition information Lxx, and the collation information Rxx, and need not be common, as illustrated in Fig. 36.

In the file path condition and the directory path condition of the common definition information Gx, a character string constituting the file path or the directory path described in the list B1, the list B2, and the list B3 of the collation information are defined using the regular expression.

For example, the processing of creating the file path of the collation information Rxx will be described as an example. The common definition information Gx defines a part of the file path using a regular expression (see (1) in Fig. 36). Further, in the individual definition information Lxx, a value of the regular expression is defined (see (2) in Fig. 36). The generation unit 147 creates a file path from the definitions of the common definition information Gx and the individual definition information Lxx according to the file path condition in the common definition information Gx (see (3) in Fig. 36). Specifically, for the file "#12", the common definition information Gx defines the file path of the file "#12" as "/d2/f12. ^{∗} ¥ .exe", and a part thereof is defined as any character string ".*" using the regular expression. In the individual definition information Lxx, a value of the character string is defined as "test" for the file path of the file "#12". The generation unit 147 creates "/d2/f12test.exe" as the file path of the file "#12" from the definitions of the common definition information Gx and the individual definition information Lxx.

Here, in the related art (for example, functions described in Non Patent Literatures 1 and 2), when some of the file paths of the files belonging to the software package can be customized (prefix designation, wildcard designation, or the like), the software provider cannot designate the file paths of the collation information of the files.

On the other hand, in Modification Example 2 of the embodiment, a software provider provides the common definition information that is partially defined by a prefix, a wildcard, or a regular expression. The administrator of the file management device 5 only inputs a value of the prefix, the wild card, or the regular expression within a range satisfying the file path condition and the directory path condition of the common definition information to determine the file paths. The administrator of the file management device 5 designates the file paths determined in this way as the file paths of the lists B 1 to B3 of the collation information 122. Thus, in the present embodiment, even when the file path of the file belonging to the software package is partially designated by the prefix or the wild card, the file paths of the lists B 1 to B3 of the collation information can be determined without delay.

### System Configuration of Embodiment

Respective components of each device included in the file management system 1 illustrated in Fig. 1 are functionally conceptual and do not necessarily have to be physically configured as illustrated. That is, a specific form of distribution and integration of functions of the respective devices included in the file management system 1 is not limited to the illustrated form, and all or part thereof can be functionally or physically distributed or integrated in any unit according to various loads or usage situations.

In addition, all or some of the processing operations performed in the respective devices included in the file management system 1 may be implemented by a CPU, a graphics processing unit (GPU), and a program that is analyzed and executed by the CPU or the GPU. Further, the processing operations performed in the respective devices included in the file management system 1 may be implemented as hardware by a wired logic.

Further, all or some of the processing operations described as being automatically performed among the processing operations described in the embodiment may be manually performed. Alternatively, all or some of the processing operations described as being manually performed can be automatically performed using a known method. In addition, the processing procedures, control procedures, specific names, and information including various types of data and parameters described and illustrated above can be appropriately changed unless otherwise specified.

### Program

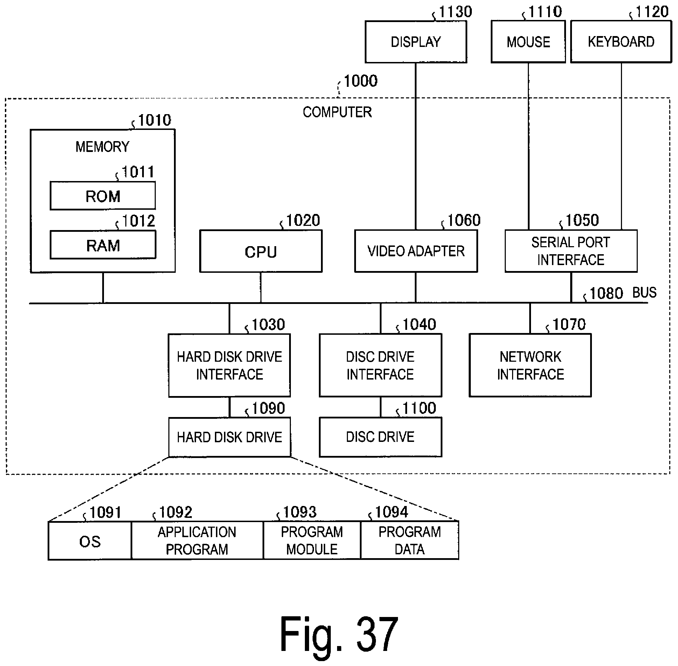

Fig. 37 is a diagram illustrating an example of a computer that implements each device included in the file management system 1 by a program being executed. A computer 1000 includes, for example, a memory 1010 and a CPU 1020. Further, the computer 1000 includes a hard disk drive interface 1030, a disc drive interface 1040, a serial port interface 1050, a video adapter 1060, and a network interface 1070. These units are connected by a bus 1080.

The memory 1010 includes a read only memory (ROM) 1011 and a RAM 1012. The ROM 1011 stores, for example, a boot program, such as a basic input output system (BIOS). The hard disk drive interface 1030 is connected to a hard disk drive 1090. The disc drive interface 1040 is connected to a disc drive 1100. A detachable storage medium such as a magnetic disk or optical disc, for example, is inserted into the disc drive 1100. The serial port interface 1050 is connected to, for example, a mouse 1110 and a keyboard 1120. The video adapter 1060 is connected to a display 1130, for example.

The hard disk drive 1090 stores, for example, an OS 1091, an application program 1092, a program module 1093, and program data 1094. That is, a program defining each of processing operations of the respective devices included in the file management system 1 is implemented as the program module 1093 to which code executable by the computer 1000 has been described. The program module 1093 is stored in, for example, the hard disk drive 1090. For example, the program module 1093 for executing the same processing as that of a functional configuration in each device included in the file management system 1 is stored in the hard disk drive 1090. The hard disk drive 1090 may be replaced with an SSD.

Further, configuration data to be used in the processing of the embodiment described above is stored as the program data 1094 in, for example, the memory 1010 or the hard disk drive 1090. The CPU 1020 reads the program module 1093 or the program data 1094 stored in the memory 1010 or the hard disk drive 1090 into the RAM 1012 as necessary, and executes the program module 1093 or the program data 1094.

The program module 1093 or the program data 1094 is not limited to being stored in the hard disk drive 1090, and may be stored, for example, in a detachable storage medium and read by the CPU 1020 via the disc drive 1100 or the like. Alternatively, the program module 1093 and the program data 1094 may be stored in another computer connected via a network (LAN, a wide area network (WAN), or the like). The program module 1093 and the program data 1094 may be read from another computer via the network interface 1070 by the CPU 1020.

The embodiments to which the invention made by the present inventor is applied have been described above, but the present invention is not limited to the description and the drawings, which form a part of the disclosure of the present invention according to the embodiment. That is, all other embodiments, examples, operation techniques, and the like made by those skilled in the art based on the embodiment are included in the scope of the present invention.

### Reference Signs List

1 File management system
2 Common definition information database (DB)
3 Common definition information acquisition device
4 Collation information generation device
5 File management device
11 File storage unit
12 Verification information storage unit
31, 41, 51 Input unit
32, 42, 52 Communication unit
33, 43, 53 Storage unit
34, 44, 54 Control unit
35, 45, 55 Output unit
121 Verification content information
122 Collation information
123 Common definition information
124 Item extraction information
125 Individual definition information
126 Condition information
127 Correspondence relationship information
141 File management unit
142 Collation information generation unit
143 File verification unit
144 Common definition information acquisition unit
145 Individual definition item extraction unit
146 Individual definition information input unit
147 Generation unit
148 Collation unit
149 Verification unit
331 Identifier information
341 Common definition information acquisition unit
342 Common definition information distinction unit
343 Output control unit

## Claims

1. A management system (1) comprising a file management device (5) configured to manage files of the file management device, a generation device (4) configured to generate a list of combinations of file paths and digest values of the files as collation information for the management device (5) when performing a tampering verification or an addition/deletion verification of a file, and an acquisition device (3) configured to acquire information to be used for generation of the collation information in the generation device (4),
**characterized in that**
the acquisition device (3) includes
a first acquisition unit (341) configured to acquire first common definition information corresponding to identification information of the first common definition information input to the acquisition device (3), from a device (2) configured to store shared common definition information created in advance, indicating a definition of a common list serving as a list of files and directories that may be described in the collation information and a definition of an element attribute serving as conditions for determining elements of a list of files and directories in the collation information in the management device (5);
a distinction unit (342) configured to compare the first common definition information acquired by the first acquisition unit (341) with the files managed by the file management device (5) to distinguish whether there is a condition satisfying file satisfying all conditions of the first common definition information; and
an output unit (343) configured to output, to the generation device (4), second common definition information corresponding to the condition satisfying file among the first common definition information acquired by the first acquisition unit (341) based on a distinction result of the distinction unit (342).

2. The management system (1) according to claim 1, wherein the first acquisition unit (341) further acquires another identification information relevant to the identification information of the first common definition information input to the acquisition device (3), and acquires the second common definition information based on the identification information of the first common definition information input to the acquisition device (3) and the other identification information.

3. The management system (1) according to claim 1 or 2,
wherein the generation device (4) includes
a second acquisition unit (144) configured to acquire at least a part of the second common definition information output by the acquisition device (3); and
a generation unit (142) configured to generate collation information having a first list, as the collation information, indicating a combination of a file path of a file to be arranged and of which file data does not change and a digest value of the file data, a second list indicating a file path of a file to be arranged and of which file data is changeable, and a third list indicating a directory path of directory satisfying a first directory condition indicating a directory in which a file arranged directly under is a file described in the first list or the second list belonging to an identical collation information, a second directory condition indicating a directory in which a directory arranged directly under is a directory under which one or more files described in the first list or the second list belonging to an identical collation information are arranged, and a third directory condition indicating a directory that a file or a directory not corresponding to the first directory condition or the second directory condition is not arranged directly under, based on a common list and an element attribute of the second common definition information acquired by the second acquisition unit (144).

4. The management system (1) according to claim 3, wherein the generation device (4) sets a value to be set as individual definition information according to a state of files present in the file management device (5), the individual definition information being information indicating a condition to be individually provided according to the file management device (5), for a file to be arranged in the file management device (5).

5. An acquisition device (3) for acquiring information to be used for generation of a list of combinations of file paths and digest values of the files as collation information when a tampering verification or an addition/deletion verification of a file is performed, the acquisition device (3) comprising:
an first acquisition unit (341) configured to acquire first common definition information corresponding to identification information of the first common definition information input to the acquisition device (3), from a device (2) configured to store shared common definition information created in advance, indicating a definition of a common list serving as a list of files and directories that may be described in the collation information and a definition of an element attribute serving as conditions for determining elements of a list of files and directories in the collation information in the management device (5);
a distinction unit (342) configured to compare the first common definition information acquired by the acquisition unit (341) with a files managed by the file management device (5) to distinguish whether there is a condition satisfying file satisfying all conditions of the first common definition information; and
an output unit (343) configured to output second common definition information corresponding to the condition satisfying file among the first common definition information acquired by the acquisition unit (341) based on a distinction result of the distinction unit (342).

6. A management method executed by a management system (1) including a file management device (5) configured to manage files of the file management device, a generation device (4) configured to generate a list of combinations of file paths and digest values of the files as collation information for the management device (5) when performing a tampering verification or an addition/deletion verification of the files, and an acquisition device (3) configured to acquire information to be used for generation of the collation information in the generation device (4), the management method comprising the steps of:
acquiring first common defintion information corresponding to identification information of the first common defintion information input to the acquisition device (3), by the acquisition device (3), from a device (2) configured to store shared common definition information created in advance, indicating a definition of a common list serving as a list of files and directories that may be described in the collation information and a definition of an element attribute serving as conditions for determining elements of a list of files and directories in the collation information in the file management device (5;
comparing, by the acquisition device (3), the first common definition information that is acquired with the files managed by the file management device (5) to distinguish whether there is a condition satisfying file satisfying all conditions of the first common definition information; and
outputting, by the acquisition device (3), to the generation device (4), second common definition information corresponding to the condition satisfying file among the first common definition information acquired in the acquiring step based on a distinction result.

## Patentansprüche

1. Verwaltungssystem (1), das eine Dateiverwaltungsvorrichtung (5), die dazu ausgelegt ist, Dateien der Dateiverwaltungsvorrichtung zu verwalten, eine Erzeugungsvorrichtung (4), die dazu ausgelegt ist, eine Liste von Kombinationen von Dateipfaden und Hashwerten der Dateien als Vergleichsinformationen für die Verwaltungsvorrichtung (5) zu erzeugen, wenn eine Manipulationsverifizierung oder eine Hinzufügungs-/Löschungsverifizierung einer Datei durchgeführt wird, und eine Beschaffungsvorrichtung (3) umfasst, die dazu ausgelegt ist, Informationen zu beschaffen, die zur Erzeugung der Vergleichsinformationen in der Erzeugungsvorrichtung (4) zu verwenden sind,
**dadurch gekennzeichnet, dass**
die Beschaffungsvorrichtung (3) Folgendes beinhaltet
eine erste Beschaffungseinheit (341), die dazu ausgelegt ist, erste gemeinsame Definitionsinformationen, die Identifikationsinformationen des ersten gemeinsamen Definitionsinformationseingangs zur Beschaffungsvorrichtung (3) entsprechen, von einer Vorrichtung (2) zu beschaffen, die dazu ausgelegt ist, im Voraus erstellte, geteilte gemeinsame Definitionsinformationen zu speichern, die eine Definition einer gemeinsamen Liste, die als eine Liste von Dateien und Verzeichnissen dient, die in den Vergleichsinformationen beschrieben sein können, und eine Definition eines Elementattributs angeben, die als Bedingungen zum Bestimmen von Elementen einer Liste von Dateien und Verzeichnissen in den Vergleichsinformationen in der Verwaltungsvorrichtung (5) dienen;
eine Unterscheidungseinheit (342), die dazu ausgelegt ist, die ersten gemeinsamen Definitionsinformationen, die von der ersten Beschaffungseinheit (341) beschafft werden, mit den Dateien zu vergleichen, die von der Dateiverwaltungsvorrichtung (5) verwaltet werden, um zu unterscheiden, ob es eine bedingungserfüllende Datei gibt, die alle Bedingungen der ersten gemeinsamen Definitionsinformationen erfüllt; und
eine Ausgangseinheit (343), die dazu ausgelegt ist, an die Erzeugungsvorrichtung (4) zweite gemeinsame Definitionsinformationen, die der bedingungserfüllenden Datei unter den ersten gemeinsamen Definitionsinformationen entsprechen, die von der ersten Beschaffungseinheit (341) beschafft wurden, basierend auf einem Unterscheidungsergebnis der Unterscheidungseinheit (342) auszugeben.

2. Verwaltungssystem (1) nach Anspruch 1, wobei die erste Beschaffungseinheit (341) weiter andere Identifikationsinformationen beschafft, die für die Identifikationsinformationen des ersten gemeinsamen Definitionsinformationseingangs zu der Beschaffungsvorrichtung (3) relevant sind, und die zweiten gemeinsamen Definitionsinformationen basierend auf den Identifikationsinformationen des ersten gemeinsamen Definitionsinformationseingangs zu der Beschaffungsvorrichtung (3) und den anderen Identifikationsinformationen beschafft.

3. Verwaltungssystem (1) nach Anspruch 1 oder 2,
wobei die Erzeugungsvorrichtung (4) Folgendes beinhaltet
eine zweite Beschaffungseinheit (144), die dazu ausgelegt ist, zumindest einen Teil des zweiten gemeinsamen Definitionsinformationsausgangs von der Beschaffungsvorrichtung (3) zu beschaffen; und
eine Erzeugungseinheit (142), die dazu ausgelegt ist, Vergleichsinformationen zu erzeugen, die eine erste Liste, als die Vergleichsinformationen, die eine Kombination eines Dateipfads einer Datei, die einzurichten ist und deren Dateidaten sich nicht ändern, und eines Hashwerts der Dateidaten angibt, eine zweite Liste, die einen Dateipfad einer Datei angibt, die einzurichten ist und deren Dateidaten veränderbar sind, und eine dritte Liste aufweisen, die einen Verzeichnispfad eines Verzeichnisses angibt, das eine erste Verzeichnisbedingung, die ein Verzeichnis angibt, in dem eine direkt darunter eingerichtete Datei eine Datei ist, die in der ersten Liste oder der zweiten Liste beschrieben wird, die zu identischen Vergleichsinformationen gehören, eine zweite Verzeichnisbedingung, die ein Verzeichnis angibt, in dem ein direkt darunter eingerichtetes Verzeichnis ein Verzeichnis ist, unter dem eine oder mehrere Dateien, die in der ersten Liste oder der zweiten Liste beschrieben sind, die zu identischen Vergleichsinformationen gehören, eingerichtet sind, und eine dritte Verzeichnisbedingung erfüllt, die ein Verzeichnis angibt, unter dem eine Datei oder ein Verzeichnis, das nicht der ersten Verzeichnisbedingung oder der zweiten Verzeichnisbedingung entspricht, nicht direkt eingerichtet ist, basierend auf einer gemeinsamen Liste und einem Elementattribut der zweiten gemeinsamen Definitionsinformationen, die von der zweiten Beschaffungseinheit (144) beschafft werden.

4. Verwaltungssystem (1) nach Anspruch 3, wobei die Erzeugungsvorrichtung (4) einen Wert festlegt, der als individuelle Definitionsinformationen gemäß einem Zustand von Dateien festzulegen ist, die in der Dateiverwaltungsvorrichtung (5) vorhanden sind, wobei die individuellen Definitionsinformationen Informationen sind, die eine Bedingung angeben, die individuell gemäß der Dateiverwaltungsvorrichtung (5) für eine Datei bereitzustellen ist, die in der Dateiverwaltungsvorrichtung (5) einzurichten ist.

5. Beschaffungsvorrichtung (3) zum Beschaffen von Informationen, die zur Erzeugung einer Liste von Kombinationen von Dateipfaden und Hashwerten der Dateien als Vergleichsinformationen zu verwenden sind, wenn eine Manipulationsverifizierung oder eine Hinzufügungs-/Löschungsverifizierung einer Datei durchgeführt wird, wobei die Beschaffungsvorrichtung (3) Folgendes umfasst:
eine erste Beschaffungseinheit (341), die dazu ausgelegt ist, erste gemeinsame Definitionsinformationen entsprechend Identifikationsinformationen des ersten gemeinsamen Definitionsinformationseingangs zu der Beschaffungsvorrichtung (3) von einer Vorrichtung (2) zu beschaffen, die dazu ausgelegt ist, im Voraus erstellte, geteilte gemeinsame Definitionsinformationen zu speichern, die eine Definition einer gemeinsamen Liste, die als eine Liste von Dateien und Verzeichnissen dient, die in den Vergleichsinformationen beschrieben sein können, und eine Definition eines Elementattributs angeben, die als Bedingungen zum Bestimmen von Elementen einer Liste von Dateien und Verzeichnissen in den Vergleichsinformationen in der Verwaltungsvorrichtung (5) dienen;
eine Unterscheidungseinheit (342), die dazu ausgelegt ist, die ersten gemeinsamen Definitionsinformationen, die von der Beschaffungseinheit (341) beschafft werden, mit Dateien zu vergleichen, die von der Dateiverwaltungsvorrichtung (5) verwaltet werden, um zu unterscheiden, ob es eine bedingungserfüllende Datei gibt, die alle Bedingungen der ersten gemeinsamen Definitionsinformationen erfüllt; und
eine Ausgangseinheit (343), die dazu ausgelegt ist, zweite gemeinsame Definitionsinformationen entsprechend der bedingungserfüllenden Datei unter den ersten gemeinsamen Definitionsinformationen, die von der Beschaffungseinheit (341) beschafft werden, basierend auf einem Unterscheidungsergebnis der Unterscheidungseinheit (342) auszugeben.

6. Verwaltungsverfahren, das von einem Verwaltungssystem (1) ausgeführt wird, das eine Dateiverwaltungsvorrichtung (5), die dazu ausgelegt ist, Dateien der Dateiverwaltungsvorrichtung zu verwalten, eine Erzeugungsvorrichtung (4), die dazu ausgelegt ist, eine Liste von Kombinationen von Dateipfaden und Hashwerten der Dateien als Vergleichsinformationen für die Verwaltungsvorrichtung (5) zu erzeugen, wenn eine Manipulationsverifizierung oder eine Hinzufügungs-/Löschungsverifizierung der Dateien durchgeführt wird, und eine Beschaffungsvorrichtung (3) beinhaltet, die dazu ausgelegt ist, Informationen zu beschaffen, die zur Erzeugung der Vergleichsinformationen in der Erzeugungsvorrichtung (4) zu verwenden sind, wobei das Verwaltungsverfahren die folgenden Schritte umfasst:
Beschaffen erster gemeinsamer Definitionsinformationen, die Identifikationsinformationen der ersten gemeinsamen Definitionsinformationen entsprechen, die in die Beschaffungsvorrichtung (3) eingegeben werden, durch die Beschaffungsvorrichtung (3), von einer Vorrichtung (2), die dazu ausgelegt ist, im Voraus erstellte, geteilte gemeinsame Definitionsinformationen zu speichern, die eine Definition einer gemeinsamen Liste, die als eine Liste von Dateien und Verzeichnissen dient, die in den Vergleichsinformationen beschrieben sein können, und eine Definition eines Elementattributs angeben, die als Bedingungen zum Bestimmen von Elementen einer Liste von Dateien und Verzeichnissen in den Vergleichsinformationen in der Dateiverwaltungsvorrichtung (5) dienen;
Vergleichen, durch die Beschaffungsvorrichtung (3), der ersten gemeinsamen Definitionsinformationen, die mit den Dateien beschafft werden, die von der Dateiverwaltungsvorrichtung (5) verwaltet werden, um zu unterscheiden, ob es eine bedingungserfüllende Datei gibt, die alle Bedingungen der ersten gemeinsamen Definitionsinformationen erfüllt; und
Ausgeben, durch die Beschaffungsvorrichtung (3), an die Erzeugungsvorrichtung (4), zweiter gemeinsamer Definitionsinformationen, die der bedingungserfüllenden Datei unter den ersten gemeinsamen Definitionsinformationen entsprechen, die in dem Beschaffungsschritt basierend auf einem Unterscheidungsergebnis beschafft werden.

## Revendications

1. Système de gestion (1) comprenant un dispositif de gestion de fichiers (5) configuré pour gérer des fichiers du dispositif de gestion de fichiers, un dispositif de génération (4) configuré pour générer une liste de combinaisons de chemins d'accès aux fichiers et de valeurs de condensé des fichiers en tant qu'informations de compilation pour le dispositif de gestion (5) lors de la réalisation d'une vérification de falsification ou d'une vérification d'ajout/suppression d'un fichier, et un dispositif d'acquisition (3) configuré pour acquérir des informations devant être utilisées pour la génération des informations de compilation dans le dispositif de génération (4),
**caractérisé en ce que**
le dispositif d'acquisition (3) inclut
une première unité d'acquisition (341) configurée pour acquérir des premières informations de définition communes correspondant à des informations d'identification des premières informations de définition communes entrées dans le dispositif d'acquisition (3), à partir d'un dispositif (2) configuré pour stocker des informations de définition communes partagées créées à l'avance, indiquant une définition d'une liste commune servant de liste de fichiers et de répertoires qui peuvent être décrits dans les informations de compilation et une définition d'un attribut d'élément servant de conditions pour déterminer des éléments d'une liste de fichiers et de répertoires dans les informations de compilation dans le dispositif de gestion (5) ;
une unité de distinction (342) configurée pour comparer les premières informations de définition communes acquises par la première unité d'acquisition (341) avec les fichiers gérés par le dispositif de gestion de fichiers (5) pour distinguer s'il y a un fichier satisfaisant à des conditions satisfaisant à toutes les conditions des premières informations de définition communes ; et
une unité de sortie (343) configurée pour sortir, vers le dispositif de génération (4), des secondes informations de définition communes correspondant au fichier satisfaisant à des conditions parmi les premières informations de définition communes acquises par la première unité d'acquisition (341) sur la base d'un résultat de distinction de l'unité de distinction (342).

2. Système de gestion (1) selon la revendication 1, dans lequel la première unité d'acquisition (341) acquiert en outre d'autres informations d'identification ayant un rapport avec les informations d'identification des premières informations de définition communes entrées dans le dispositif d'acquisition (3), et acquiert les secondes informations de définition communes sur la base des informations d'identification des premières informations de définition communes entrées dans le dispositif d'acquisition (3) et des autres informations d'identification.

3. Système de gestion (1) selon la revendication 1 ou 2,
dans lequel le dispositif de génération (4) inclut
une seconde unité d'acquisition (144) configurée pour acquérir au moins une partie des secondes informations de définition communes sorties par le dispositif d'acquisition (3) ; et
une unité de génération (142) configurée pour générer des informations de compilation présentant une première liste, en tant qu'informations de compilation, indiquant une combinaison d'un chemin d'accès au fichier d'un fichier devant être agencé et dont les données de fichier ne changent pas et d'une valeur de condensé des données de fichier, une deuxième liste indiquant un chemin d'accès au fichier d'un fichier devant être agencé et dont les données de fichier peuvent être changées, et une troisième liste indiquant un chemin d'accès au répertoire d'un répertoire satisfaisant à une première condition de répertoire indiquant un répertoire dans lequel un fichier agencé directement dessous est un fichier décrit dans la première liste ou la deuxième liste appartenant à des informations de compilation identiques, une deuxième condition de répertoire indiquant un répertoire dans lequel un répertoire agencé directement dessous est un répertoire sous lequel un ou plusieurs fichiers décrits dans la première liste ou la deuxième liste appartenant à des informations de compilation identiques sont agencés, et une troisième condition de répertoire indiquant un répertoire sous lequel un fichier ou un répertoire ne correspondant ni à la première condition de répertoire ni à la deuxième condition de répertoire n'est pas agencé directement, sur la base d'une liste commune et d'un attribut d'élément des secondes informations de définition communes acquises par la seconde unité d'acquisition (144).

4. Système de gestion (1) selon la revendication 3, dans lequel le dispositif de génération (4) règle une valeur devant être réglée comme des informations de définition individuelles conformément à un état de fichiers présents dans le dispositif de gestion de fichiers (5), les informations de définition individuelles étant des informations indiquant une condition devant être fournie individuellement conformément au dispositif de gestion de fichiers (5), pour un fichier devant être agencé dans le dispositif de gestion de fichiers (5).

5. Dispositif d'acquisition (3) pour acquérir des informations devant être utilisées pour la génération d'une liste de combinaisons de chemins d'accès aux fichiers et de valeurs de condensé des fichiers en tant qu'informations de compilation lorsqu'une vérification de falsification ou une vérification d'ajout/suppression d'un fichier est réalisée, le dispositif d'acquisition (3) comprenant :
une première unité d'acquisition (341) configurée pour acquérir des premières informations de définition communes correspondant à des informations d'identification des premières informations de définition communes entrées dans le dispositif d'acquisition (3), à partir d'un dispositif (2) configuré pour stocker des informations de définition communes partagées créées à l'avance, indiquant une définition d'une liste commune servant de liste de fichiers et de répertoires qui peuvent être décrits dans les informations de compilation et une définition d'un attribut d'élément servant de conditions pour déterminer des éléments d'une liste de fichiers et de répertoires dans les informations de compilation dans le dispositif de gestion (5) ;
une unité de distinction (342) configurée pour comparer les premières informations de définition communes acquises par l'unité d'acquisition (341) avec des fichiers gérés par le dispositif de gestion de fichiers (5) pour distinguer s'il y a un fichier satisfaisant à des conditions satisfaisant à toutes les conditions des premières informations de définition communes ; et
une unité de sortie (343) configurée pour sortir des secondes informations de définition communes correspondant au fichier satisfaisant à des conditions parmi les premières informations de définition communes acquises par l'unité d'acquisition (341) sur la base d'un résultat de distinction de l'unité de distinction (342).

6. Procédé de gestion exécuté par un système de gestion (1) incluant un dispositif de gestion de fichiers (5) configuré pour gérer des fichiers du dispositif de gestion de fichiers, un dispositif de génération (4) configuré pour générer une liste de combinaisons de chemins d'accès aux fichiers et de valeurs de condensé des fichiers en tant qu'informations de compilation pour le dispositif de gestion (5) lors de la réalisation d'une vérification de falsification ou d'une vérification d'ajout/suppression des fichiers, et un dispositif d'acquisition (3) configuré pour acquérir des informations devant être utilisées pour la génération des informations de compilation dans le dispositif de génération (4), le procédé de gestion comprenant les étapes :
d'acquisition de premières informations de définition communes correspondant à des informations d'identification des premières informations de définition communes entrées dans le dispositif d'acquisition (3), par le dispositif d'acquisition (3), à partir d'un dispositif (2) configuré pour stocker des informations de définition communes partagées créées à l'avance, indiquant une définition d'une liste commune servant de liste de fichiers et de répertoires qui peuvent être décrits dans les informations de compilation et une définition d'un attribut d'élément servant de conditions pour déterminer des éléments d'une liste de fichiers et de répertoires dans les informations de compilation dans le dispositif de gestion de fichiers (5) ;
de comparaison, par le dispositif d'acquisition (3), des premières informations de définition communes qui sont acquises avec les fichiers gérés par le dispositif de gestion de fichiers (5) pour distinguer s'il y a un fichier satisfaisant à des conditions satisfaisant à toutes les conditions des premières informations de définition communes ; et
de sortie, par le dispositif d'acquisition (3), vers le dispositif de génération (4), de secondes informations de définition communes correspondant au fichier satisfaisant à des conditions parmi les premières informations de définition communes acquises à l'étape d'acquisition sur la base d'un résultat de distinction.
